# EUROPEAN PATENT APPLICATION

(11) **EP 2 587 849 A2**
(43) Date of publication of application: **01.05.2013**
(21) Application number: 12184349.4
(22) Date of filing: 14.09.2012
(51) Int. Cl.: H04W 8/00

(54) **Method, apparatus, and computer program product for stopping reception of discovery responses in wireless networks**

(30) Priority: 27.10.2011 US 201113282703
(71) Applicant: Nokia Corporation, 02150 Espoo (FI)
(72) Inventor: Kneckt, Jarkko, 02330 Espoo (FI); Ong, Eng Hwee, 680237 Singapore (SG); Kasslin, Mika, 02770 Espoo (FI); Bajko, Gabor, Sunnyvale, CA 94086 (US)
(74) Representative: Nokia Corporation

(57) **Abstract**

Method, apparatus, and computer program product embodiments of the invention are disclosed to improve the discovery of wireless networks. In example embodiments of the invention, a method comprises: transmitting, by an apparatus, one or more wireless discovery request messages to discover a wireless network matching one or more predetermined characteristics; receiving by an apparatus, from one or more wireless devices, zero or more wireless responses to the one or more wireless discovery request messages, and transmitting by the apparatus, a wireless message including an indication that the apparatus will not listen to further wireless responses.

## Description

### FIELD

The embodiments relate to wireless communication, and more particularly to discovery of wireless networks.

### BACKGROUND:

Modem society has adopted, and is becoming reliant upon, wireless communication devices for various purposes, such as connecting users of the wireless communication devices with other users. Wireless communication devices can vary from battery powered handheld devices to stationary household and/or commercial devices utilizing an electrical network as a power source. Due to rapid development of the wireless communication devices, a number of areas capable of enabling entirely new types of communication applications have emerged.

Cellular networks facilitate communication over large geographic areas. These network technologies have commonly been divided by generations, starting in the late 1970s to early 1980s with first generation (1 G) analog cellular telephones that provided baseline voice communications, to modem digital cellular telephones. GSM is an example of a widely employed 2G digital cellular network communicating in the 900 MHZ/1.8 GHZ bands in Europe and at 850 MHz and 1.9 GHZ in the United States. While long-range communication networks, like GSM, are a well-accepted means for transmitting and receiving data, due to cost, traffic and legislative concerns, these networks may not be appropriate for all data applications.

Short-range communication technologies provide communication solutions that avoid some of the problems seen in large cellular networks. Bluetooth^{™} is an example of a short-range wireless technology quickly gaining acceptance in the marketplace. In addition to Bluetooth^{™} other popular short-range communication technologies include Bluetooth^{™} Low Energy, IEEE 802.11 wireless local area network (WLAN), Wireless USB (WUSB), Ultra Wide-band (UWB), ZigBee (IEEE 802.15.4, IEEE 802.15.4a), and ultra-high frequency radio frequency identification (UHF RFID) technologies. All of these wireless communication technologies have features and advantages that make them appropriate for various applications.

### SUMMARY

Method, apparatus, and computer program product embodiments of the invention are disclosed to improve the discovery of wireless networks.

In example embodiments of the invention, a method comprises:
transmitting, by an apparatus, one or more wireless discovery request messages to discover a wireless network matching one or more predetermined characteristics;
receiving by an apparatus, from one or more wireless devices, zero or more wireless responses to the one or more wireless discovery request messages, and
transmitting by the apparatus, a wireless message including an indication that the apparatus will not listen to further wireless responses.

In example embodiments of the invention, the method further comprises:
maintaining by the apparatus, a list of one or more predetermined wireless network characteristics;
receiving by the apparatus, the wireless responses until a wireless network having one or more of the predetermined wireless network characteristics is found; and transmitting by the apparatus, the wireless message in response to the finding.

In example embodiments of the invention, the method further comprises:
maintaining a list of one or more predetermined wireless networks;
receiving by the apparatus, the wireless responses until at least a predetermined number of the one or more of wireless networks listed on the list, is found; and transmitting by the apparatus, the wireless message in response to the finding.

In example embodiments of the invention, the method further comprises:
wherein the zero or more wireless responses are probe responses.

In example embodiments of the invention, the method further comprises:
wherein the zero or more wireless responses are wireless generic advertisement service responses.

In example embodiments of the invention, the method further comprises:
wherein the indication included in the wireless message specifies that the apparatus will not listen to further wireless responses from at least one of a network having a specific network ID, a mesh network having a specific Mesh ID or a network having a specific network topology.

In example embodiments of the invention, the method further comprises:
wherein the one or more wireless devices are one or more of access point devices, mesh point devices, and stations.

In example embodiments of the invention, the method further comprises:
wherein the one or more wireless devices are known from at least one of a location database, a detection of a roaming partner name from an SSID, or at least one previous scanning.

In example embodiments of the invention, the method further comprises:
wherein the indication included in the wireless message specifies that the apparatus will not listen to further wireless responses from at least one of a network having a specific network ID, a mesh network having a specific Mesh ID or a network having a specific network topology; and
wherein the indication included in the wireless message further specifies that other wireless responses may be transmitted after the wireless message from at least one of another network, another mesh network or another network having a different network topology.

In example embodiments of the invention, an apparatus comprises:
at least one processor;
at least one memory including computer program code;
the at least one memory and the computer program code configured to, with the at least one processor, cause the apparatus at least to:
   transmit one or more wireless discovery request messages to discover a wireless network matching one or more predetermined characteristics;
   receive from one or more wireless devices, zero or more wireless responses to the one or more wireless discovery request messages, and
   transmit a wireless message including an indication that the apparatus will not listen to further wireless responses.

In example embodiments of the invention, the apparatus further comprises:
wherein the apparatus is one of an access point device or a station.

In example embodiments of the invention, a computer program product comprising computer executable program code recorded on a computer readable, non-transitory storage medium, the computer executable program code, when executed by a computer processor, comprises:
code for transmitting, by an apparatus, one or more wireless discovery request messages to discover a wireless network matching one or more predetermined characteristics;
code for receiving by an apparatus, from one or more wireless devices, zero or more wireless responses to the one or more wireless discovery request messages, and
code for transmitting by the apparatus, a wireless message including an indication that the apparatus will not listen to further wireless responses.

In example embodiments of the invention, a method comprises:
receiving by an apparatus, a wireless discovery request message from a sending device, to discover a wireless network matching one or more predetermined characteristics;
receiving by the apparatus, a wireless message from the sending device, including an indication that the sending device will not listen to further wireless responses; and
either suppressing transmission of a wireless response to the sending device or transmitting a wireless response without expecting an acknowledgment.

In example embodiments of the invention, the method further comprises:
reading an indication included in the wireless message that specifies that the sending device will not listen to further wireless responses from at least one of a network having a specific network ID, a mesh network having a specific Mesh ID or a network having a specific network topology; and
selecting to either suppressing transmission of the wireless response to the sending device or transmitting the wireless response without expecting an acknowledgment, if the apparatus is part of at least one of a network having the specific network ID, a mesh network having the specific Mesh ID or a network having the specific network topology.

In example embodiments of the invention, the method further comprises:
wherein the apparatus is one of an access point device, mesh point device, or a station.

In example embodiments of the invention, the method further comprises:
wherein the wireless response is a probe response or the wireless response is a wireless generic advertisement service response.

In example embodiments of the invention, an apparatus comprises:
at least one processor;
at least one memory including computer program code;
the at least one memory and the computer program code configured to, with the at least one processor, cause the apparatus at least to:
   receive a wireless discovery request message from a sending device, to discover a wireless network matching one or more predetermined characteristics;
   receive a wireless message from the sending device, including an indication that the sending device will not listen to further wireless responses; and
   either suppress transmission of a wireless response to the sending device or transmit a wireless response without expecting an acknowledgment.

In example embodiments of the invention, the apparatus further comprises:
reading an indication included in the wireless message that specifies that the sending device will not listen to further wireless responses from at least one of a network having a specific network ID, a mesh network having a specific Mesh ID or a network having a specific network topology; and
select to either suppress transmission of the wireless response to the sending device or transmit the wireless response without expecting an acknowledgment, if the apparatus is part of at least one of a network having the specific network ID, a mesh network having the specific Mesh ID or a network having the specific network topology.

In example embodiments of the invention, the apparatus further comprises:
wherein the apparatus is one of an access point devices or a station.

In example embodiments of the invention, the apparatus further comprises:
wherein the wireless response is a probe response or the wireless response is a wireless generic advertisement service response.

In example embodiments of the invention, a computer program product comprising computer executable program code recorded on a computer readable, non-transitory storage medium, the computer executable program code, when executed by a computer processor, comprises:
code for receiving by an apparatus, a wireless discovery request message from a sending device, to discover a wireless network matching one or more predetermined characteristics;
code for receiving by the apparatus, a wireless message from the sending device, including an indication that the sending device will not listen to further wireless responses; and
code for either suppressing transmission of a wireless response to the sending device or transmitting a wireless response without expecting an acknowledgment.

In this manner, embodiments of the invention improve the discovery of wireless networks.

### DESCRIPTION OF THE FIGURES

Figure 1A illustrates an example wireless network diagram of a wireless node in the discovery state, NODE A, broadcasting a probe request message to a plurality of four receiving wireless nodes NODE 1 to NODE 4, in accordance with example embodiments of the invention.
Figure 1B illustrates the example wireless network diagram of Figure 1A, of one receiving wireless node, NODE 2, of the plurality of four receiving wireless node devices, replying to the probe request message with a probe response, in accordance with an example embodiment of the invention.
Figure 1C illustrates the example wireless network diagram of Figure 1B, wherein the wireless node in the discovery state, NODE A, broadcasts a probe end frame message to the plurality of four receiving wireless nodes, the message including an indication that the node, NODE A, will not listen to further wireless probe responses from at least one of the one or more wireless devices nodes NODE 1 to NODE 4, in accordance with an example embodiment of the invention.
Figure 1D illustrates the example wireless network diagram of Figure 1B, wherein the wireless node in the discovery state, NODE A, transmits a probe end frame message to one or more of the receiving wireless nodes, NODE 1 to NODE 4, the probe end frame message specifying that the NODE A will not listen to further wireless probe responses from at least one of a network having a specific network ID, a mesh network having a specific Mesh ID or a network having a specific network topology, in accordance with an example embodiment of the invention.

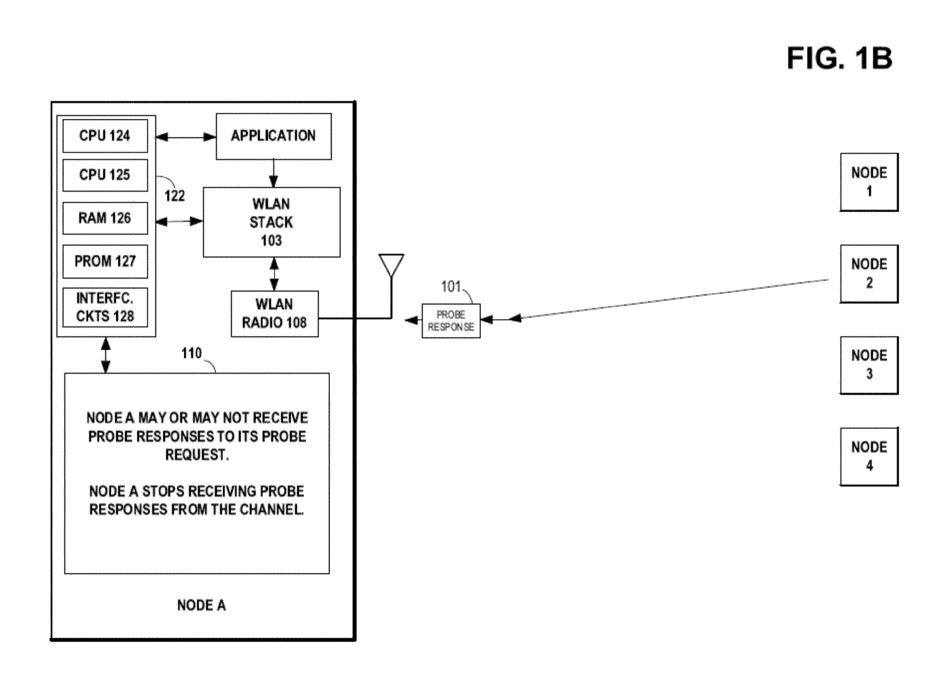

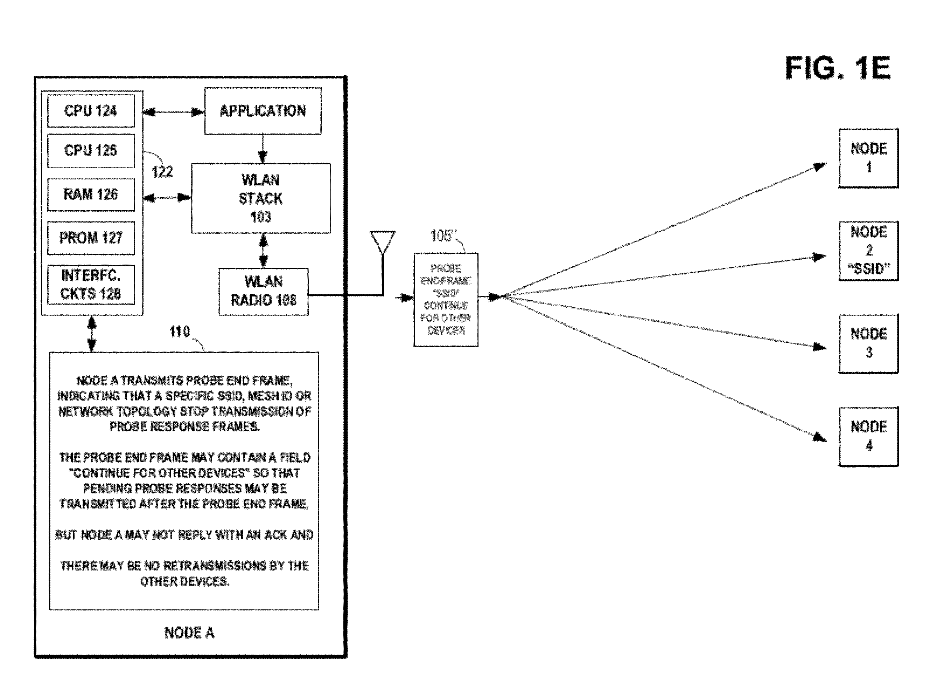

Figure 1E illustrates the example wireless network diagram of Figure 1B, wherein the wireless node in the discovery state, NODE A, transmits a probe end frame message to one or more of the receiving wireless nodes, NODE 1 to NODE 4, the probe end frame message specifying that the NODE A will not listen to further wireless probe responses from at least one of a network having a specific network ID, a mesh network having a specific Mesh ID or a network having a specific network topology, but the probe end frame message contains a one bit field "Continue for Other Devices", which if set, indicates that pending probe responses are requested to be transmitted after the probe end frame message, in accordance with an example embodiment of the invention. In example embodiments of the invention the probe responses may be transmitted even if the bit is not set.
Figure 2A illustrates an example wireless network diagram of a wireless node in the discovery state, NODE A, broadcasting a GAS request message to a plurality of four receiving wireless nodes NODE 1 to NODE 4, in accordance with example embodiments of the invention.
Figure 2B illustrates the example wireless network diagram of Figure 2A, of one receiving wireless node, NODE 2, of the plurality of four receiving wireless node devices, replying to the GAS request message with a GAS response, in accordance with an example embodiment of the invention.
Figure 2C illustrates the example wireless network diagram of Figure 2B, wherein the wireless node in the discovery state, NODE A, broadcasts a GAS end frame message to the plurality of four receiving wireless nodes, the message including an indication that the node, NODE A, will not listen to further wireless GAS responses from at least one of the one or more wireless devices nodes NODE 1 to NODE 4, in accordance with an example embodiment of the invention.
Figure 2D illustrates the example wireless network diagram of Figure 2B, wherein the wireless node in the discovery state, NODE A, transmits GAS end frame message to one or more of the receiving wireless nodes, NODE 1 to NODE 4, the GAS end frame message specifying that the NODE A will not listen to further wireless GAS responses from at least one of a network having a specific network ID, a mesh network having a specific Mesh ID or a network having a specific network topology, in accordance with an example embodiment of the invention.

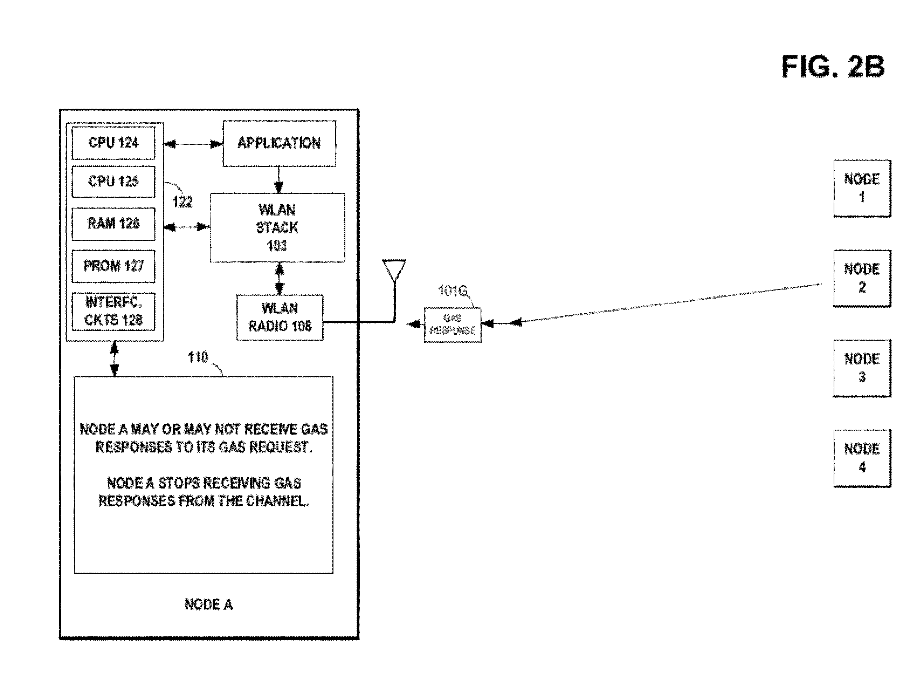

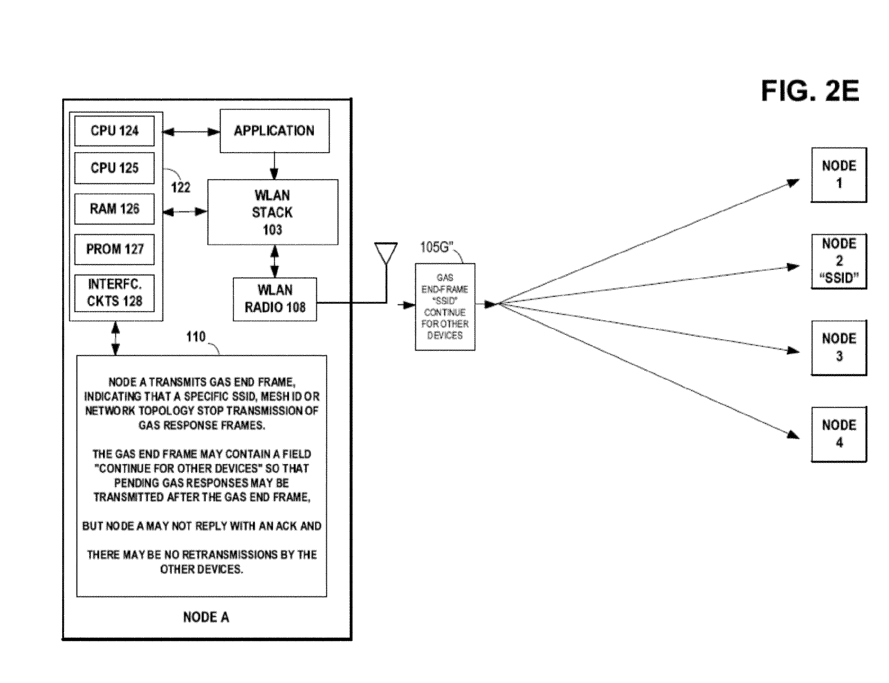

Figure 2E illustrates the example wireless network diagram of Figure 2B, wherein the wireless node in the discovery state, NODE A, transmits GAS end frame message to one or more of the receiving wireless nodes, NODE 1 to NODE 4, the GAS end frame message specifying that the NODE A will not listen to further wireless GAS responses from at least one of a network having a specific network ID, a mesh network having a specific Mesh ID or a network having a specific network topology, but the GAS end frame message contains a field "Continue for Other Devices" so that pending GAS responses may be transmitted after the end frame message, in accordance with an example embodiment of the invention.
Figure 3A illustrates an example of the probe end frame message as a generalized frame body that includes an information element, in accordance with an example embodiment of the invention.
Figure 3B illustrates an example of the probe end frame message in the IEEE 802.11 format, in accordance with an example embodiment of the invention.
Figure 3C illustrates an example of the Generic Advertisement Service (GAS) end frame message, in accordance with an example embodiment of the invention.
Figure 4A illustrates an example flow diagram of operational steps of an example embodiment of the procedure performed in the wireless node in the discovery state, NODE A, according to an embodiment of the present invention.
Figure 4B is an example flow diagram of operational steps of an example embodiment of the procedure performed in the receiving wireless node device NODE 2, according to an embodiment of the present invention.
Figure 5 illustrates an example wireless network and functional block diagram of the wireless node in the discovery state, NODE A, and the receiving wireless node, NODE 2, with NODE A, transmitting a probe end frame message, in accordance with an example embodiment of the invention.
Figure 6A is an example timing diagram for a probe end frame message, in accordance with an example embodiment of the invention.
Figure 6B is an example timing diagram for a "More Data" field in an acknowledgement frame to terminate a probe response, in accordance with an example embodiment of the invention.
Figure 7A is an example timing diagram for a GAS request transmitted to a broadcast address and the requesting device transmitting a GAS end frame to indicate that it will not listen to further pending GAS responses, in accordance with an example embodiment of the invention.
Figure 7B is an example timing diagram for a delayed GAS response that indicates that the device should retransmit the GAS request after a specified duration, and a GAS end frame indicates that the requestor will not transmit GAS request again after the duration, in accordance with an example embodiment of the invention.
Figure 7C is an example timing diagram for a GAS request transmitted to a broadcast address and two devices replying with GAS responses, followed by a GAS end frame, in accordance with an example embodiment of the invention.
Figure 8 illustrates an example of the content of the probe end frame message or the GAS end frame message, in accordance with an example embodiment of the invention.
Figure 9 illustrates an example wireless network and functional block diagram of the wireless node in the discovery state, NODE A, and a regional database containing the geographic locations of wireless nodes and their addresses, NODE A, and the regional database communicating over a wide area wireless network, in accordance with an example embodiment of the invention.

### DISCUSSION OF EXAMPLE EMBODIMENTS OF THE INVENTION:

Many use cases for wireless networks may be improved by a faster initial link setup. For example, offloading traffic from a wide area network to a WLAN in an efficient way requires a fast initial link setup for the local area network. As another example, offloading traffic from a WLAN to a wireless personal area network (WPAN), such as a Bluetooth™ network, in an efficient way requires a fast initial link setup for the wireless personal area network.

Wireless discovery mechanisms include passive and active scanning. A device or station that uses the discovery mechanisms is said to be in the discovery state. In the passive scanning mode, a device or station in the discovery state listens to a channel for the scanning interval.

For example, a WLAN device in the discovery state, listens for beacon frames from any wireless networks or representatives of wireless networks or alternately, beacon frames that meet a given criterion, such as a device address or network ID. When a WLAN device in the discovery state uses the active scanning, it generates probe request frames and transmits them to request other devices to reply with probe response frames providing requested information.

As another example, a Bluetooth™ basic rate/enhanced data rate (BR/EDR) device in the discovery state may transmit inquiry request packets and then it may listen for inquiry response packets from a Bluetooth™ BR/EDR responding device containing the responding device's address, clock, and class of the device. The inquiry response packet may be followed by an extended inquiry response (EIR) packet that may be used to provide additional information during the inquiry response procedure, for example a local name and a list of supported services.

As another example, a Bluetooth™ Low Energy (LE) device in the discovery state is said to be in the Scanning State, wherein it listens for advertising channel packets from a specific device. The device in the discovery state may send a scanning request packet to an intended receiving device. The receiving device in the Advertising State, may respond with a scanning response packet that includes advertising data and the advertising responder's device address.

When a device in the discovery state uses the active scanning, it generates request frames and transmits them to request other devices to reply with response frames providing requested information.

It may be beneficial for devices in the discovery state to reduce the level of traffic contributed by their discovery operations. In some example embodiments, a device in the discovery state may have already detected discovery responses from a responding network or access point and, thus, may no longer need to receive additional discovery responses from the already discovered network or access point. In other example embodiments, a device in the discovery state may have learned of the proximity of a network or access point, using a geolocation-based database.

In accordance with example embodiments of the invention, the device in the discovery state may transmit a wireless end frame message including an indication that the device in the discovery state may not listen to further wireless discovery responses from at least one of the one or more wireless devices.

In accordance with example embodiments of the invention, unnecessary discovery requests are eliminated, resulting in higher speed discovery and scanning, improved device discovery time, reduced network load, and a reduction in power consumption of the discovering device. Consequently one also eliminates unnecessary responses by aborting sending one's own requests.

Example communication technologies that may benefit from example embodiments of the invention, are organized into the following topics:
A. Bluetooth™ Communication Technology
B. WLAN Communication Technology
   1. IEEE 802.11 MAC Frames and Information Elements
   2. IEEE 802.11 Beacon, Probe Request and Response
   3. Generic Advertisement Service (GAS)
   4. Wi-Fi Direct - Software Access Points
   5. IEEE 802.11 Mesh Networks
C. Stopping Reception of Discovery Responses in Wireless Networks

### A. Bluetooth™ Communication Technology

An example of a wireless short-range communication technology is Bluetooth™ communication protocol, which operates in the 2.4 GHz ISM band. Bluetooth™ is a short-range radio network, originally intended as a cable replacement. Bluetooth™ Technical Specifications are published by the Bluetooth™ SIG, Inc. On June 30, 2010, the Bluetooth™ SIG published the Bluetooth™ Core Specification, Version 4.0, which includes the basic rate/enhanced data rate (BR/EDR) and additionally, the Bluetooth low energy (LE) protocol. The Bluetooth™ BR/EDR includes the extended inquiry response (EIR). An extended inquiry response may be used to provide miscellaneous information during the inquiry response procedure. Data types may be defined for such things as local name and supported services, information that otherwise would have to be obtained by establishing a connection. A device that receives a local name and a list of supported services in an extended inquiry response does not have to connect to do a remote name request and a service discovery protocol (SDP) service search, thereby shortening the time to useful information.

A procedure for forming connections between Bluetooth™ BR/EDR devices is described in the Bluetooth™ Specification. The Bluetooth™ Baseband is the part of the Bluetooth™ system that implements the media access control (MAC) and physical layer procedures to support the connection formation, exchange of data information streams, and ad hoc networking between Bluetooth™ devices. Connection formation includes inquiry, inquiry scanning, inquiry response, extended inquiry response, paging, page scanning, and page response procedures.

### 1. Bluetooth™ BR/EDR Inquiry Request

Inquiry is a procedure where a Bluetooth™ BR/EDR device transmits inquiry messages and listens for responses in order to discover the other Bluetooth™ devices that are within the coverage area. Bluetooth™ devices use the inquiry procedure to discover nearby devices, or to be discovered by devices in their locality. A Bluetooth™ device that tries to find other nearby devices is known as an inquiring device and actively sends inquiry requests. Bluetooth™ devices that are available to be found are known as discoverable devices, listen or scan for these inquiry requests and send responses. The inquiry procedure uses dedicated physical channels for the inquiry requests and responses. The inquiry procedure does not make use of any of the architectural layers above the physical channel, although a transient physical link may be considered to be present during the exchange of inquiry and inquiry response information.

Inquiry scan is a procedure where a Bluetooth™ BR/EDR device listens for inquiry messages received on its inquiry scan physical channel. A device using one of its inquiry scan channels remains passive on that channel until it receives an inquiry message on this channel from another Bluetooth™ device. This is identified by the appropriate inquiry access code. The inquiry scanning device will then follow the inquiry response procedure to return a response to the inquiring device.

### 2. Bluetooth™ BR/EDR Inquiry Response

An inquiry response packet, which is a frequency hop synchronization (FHS) packet, is transmitted from the slave to the master after the slave has received an inquiry message. This packet contains information necessary for the inquiring master to page the slave and follows 625 microseconds after the receipt of the inquiry message. The inquiry response packet is received by the master at the hop frequency of the inquiry message received by the slave was first in the master-to-slave slot. The slave response substate for inquiries differs completely from the slave response substate applied for pages. When the inquiry message is received in the inquiry scan substate, the recipient may return an inquiry response (FHS) packet containing the recipient's device address (BD_ADDR), clock, and class of device.

The clock CLK27-2 in the FHS inquiry response packet is a 26-bit field that contains the value of the native clock CLKN of the device that sends the FHS packet, sampled at the beginning of the transmission of the access code of this FHS packet. This clock value has a resolution of 1.25ms (two-slot interval). For each new transmission, this field is updated so that it accurately reflects the real-time clock value CLKN.

On the first inquiry message received in the inquiry scan substate the slave may enter the inquiry response substate. If the slave has non-zero extended inquiry response data to send it may return an FHS packet to the master, with the extended inquiry response bit set to one, 625 microseconds (µs) after the inquiry message was received. It may then return an extended inquiry response packet 1250 microseconds after the start of the FHS packet. If the slave's extended inquiry response data is all zeroes the slave may only return an FHS packet with the extended inquiry response bit set to zero. In step 1, the master transmits an inquiry request packet using the inquiry access code (IAC). In step 2, the slave responds with the FHS packet containing the slave's Bluetooth™ device address, native clock CLKN and other slave information. This FHS packet is returned at times that tend to be random. The FHS packet is not acknowledged in the inquiry routine, but it is retransmitted at other times and frequencies as long as the master is probing with inquiry messages. If the slave has non-zero extended inquiry response data, it sends an extended inquiry response packet to the master in step 3.

### 3. Bluetooth™ BR/EDR Extended Inquiry Response

An extended inquiry response may be used to provide miscellaneous information during the inquiry response procedure. Data types are defined for such things as local name and supported services, information that otherwise would have to be obtained by establishing a connection. A device that receives a local name and a list of supported services in an extended inquiry response does not have to connect to do a remote name request and a service discovery protocol (SDP) service search, thereby shortening the time to obtain useful information. If the slave transmits an extended inquiry response packet, it is transmitted 1250 microseconds after the start of the inquiry response packet. The extended inquiry response packet is received by the master at the hop frequency when the inquiry message was received by the slave in the master-to-slave slot. The extended inquiry response packet is an asynchronous connection-oriented logical transport (ACL) data medium rate (DM) packet with type DM1, DM3, DM5, DH1, DH3 or DH5. The packet is sent on the same frequency as the (frequency hop synchronization) FHS packet, 1250 microseconds after the start of the FHS packet.

The payload data has two parts, a significant part followed by a non-significant part. The significant part contains a sequence of data structures. The non-significant part contains all zero octets. The baseband may not change any octets in the significant part. When transmitting data, the non-significant part octets may be omitted from the payload. A device may store a single extended inquiry response packet. This packet may be used with all inquiry access codes (IACs).

### 4. Bluetooth™ Low Energy (LE)

On June 30, 2010, the Bluetooth SIG published the Bluetooth Core Specification, Version 4.0, which includes the Bluetooth LE protocol for products that require lower power consumption, lower complexity, and lower cost than would be possible using the BR/EDR protocol. The Bluetooth LE radio operates in the unlicensed 2.4 GHz ISM band, in the same manner as does the Basic Rate / Enhanced Data Rate (BR/EDR) radio. Bluetooth LE is designed for applications requiring lower data rates and shorter duty cycles, with a very-low power idle mode, a simple device discovery, and short data packets. Bluetooth LE devices may employ a star topology, where one device serves as a master for a plurality of slave devices, the master dictating connection timing by establishing the start time of the first connection event and the slave devices transmitting packets only to the master upon receiving a packet from the master. According to Bluetooth LE communication protocol all connections are point-to-point connections between two devices (the master and the slave).

The Bluetooth LE protocol allows a star network topology in connections, where one device serves as a master for a plurality of slave devices. The master device dictates the connection timing and communication operations of the one or more slave devices. Bluetooth LE communicates over a total of 40 RF channels, each having a bandwidth of 2 MHz. Data communication between Bluetooth LE devices occurs in 37 pre-specified data channels, of the 40 RF channels. All data connection transmissions occur in connection events wherein a point-to-point connection is established between the master device and a slave device. In the Bluetooth LE protocol, a slave device provides data through Bluetooth LE communication to the master device to which it is connected. The remaining 3 channels, of the 40 RF channels, are advertising channels used by devices to advertise their existence and capabilities. The Bluetooth LE protocol defines a unidirectional connectionless broadcast mode on the advertising channels.

The Link Layer provides a state machine with the following five states: Standby State, Advertising State, Scanning State, Initiating State, and Connection State. The Link Layer state machine allows only one state to be active at a time. The Link Layer in the Standby State does not transmit or receive any packets and can be entered from any other state. The Link Layer in the Advertising State will be transmitting advertising channel packets and possibly listening to and responding to responses triggered by these advertising channel packets. A device in the Advertising State is known as an advertiser. The Advertising State can be entered from the Standby State. The Link Layer in the Scanning State will be listening for advertising channel packets from devices that are advertising. A device in the Scanning State is known as a scanner. The Scanning State can be entered from the Standby State. The Link Layer in the Initiating State will be listening for advertising channel packets from a specific device and responding to these packets to initiate a connection with that specific device. A device in the Initiating State is known as an initiator. The Initiating State can be entered from the Standby State. The Connection State of the Link Layer may be entered either from the Initiating State or the Advertising State. A device in the Connection State is known as being in a connection over a data channel. Within the Connection State, two roles are defined: the Master Role and the Slave Role. When a device in the Initiating State, enters the Connection State, it is in the Master Role, it exchanges data packets with a slave device in a data channel, and it defines the timings of transmissions. When a device in the Advertising State, enters the Connection State, it is in the Slave Role and exchanges data packets with a master device in a data channel, wherein the master device defines the timings of transmissions.

The advertising channel of the Bluetooth™ LE protocol may be used by a device in the discovery state (i.e., the Scanning State) to send a scanning request packet, SCAN_REQ, that includes the sender's device address and the address of the intended receiving device to which this scanning request packet is addressed. The receiving device in the Advertising State may respond on the advertising channel with a scanning response packet, SCAN_RSP, that includes advertising data and the advertising responder's device address.

### B. WLAN COMMUNICATION TECHNOLOGY

An example wireless network, such as a Wireless Local Area Network (WLAN) may be organized as an independent basic service set (IBSS), mesh basic service set (MBSS) or an infrastructure basic service set (BSS). Wireless devices in an independent basic service set (IBSS) communicate directly with one another and there is no access point (AP) in the IBSS. A mesh basic service set (MBSS) consists of autonomous wireless devices that establish peer-to-peer wireless links that provide means for multi-hop communication. An infrastructure basic service set (BSS) includes a wireless access point that may be connected to one or more servers and peripheral devices by a wired backbone connection. In an infrastructure BSS, the access point is a central hub to which mobile wireless devices are wirelessly connected. The mobile wireless devices typically do not communicate directly with one another, but communicate indirectly through the access point. An access point may be connected to other access points by a wired backbone connection in an extended service set (ESS). Mobile wireless devices may roam from one wireless connection with one access point to a second wireless connection with a second access point in the ESS, and still be linked to the first access point in the ESS via the wired backbone connection.

The IEEE 802.11 standard specifies methods and techniques of wireless local area network (WLAN) operation. Examples include the IEEE 802.11b and 802.11g wireless local area network specifications, which have been a staple technology for traditional WLAN applications in the 2.4 GHz ISM band. The various amendments to the IEEE 802.11 standard were consolidated for IEEE 802.11a, b, d, e, g, h, i, j protocols, into the base standard IEEE 802.11-2007, Wireless Medium Access Control (MAC) and Physical Layer (PHY) Specifications, June 2007 (incorporated herein by reference). Since then, emerging broadband applications have stimulated interest in developing very high-speed wireless networks for short range communication, for example, the IEEE 802.11n, the planned IEEE 802.11ac, and the planned IEEE 802.11ad WLAN specifications that are to provide a very high throughput in higher frequency bands. Applications of these IEEE 802.11 standards include products such as consumer electronics, telephones, personal computers, and access points for both for home and office.

According to an example embodiment, wireless local area networks (WLANs) typically operate in unlicensed bands. IEEE 802.11b and 802.11g WLANs have been a staple technology for traditional WLAN applications in the 2.4 GHz ISM band and have a nominal range of 100 meters. The IEEE 802.11ah WLAN standard is being developed for operation in the 900 MHz ISM band and will have a greater range and lower obstruction losses due to its longer wavelength.

### 1. IEEE 802.11 MAC Frames and Information Elements

There are three major types of medium access control (MAC) frames in the IEEE 802.11 protocol: the management frame, the control frame, and the data frame. Management frames provide management services. Data frames carry payload data. Control frames assist in the delivery of data frames. Each of these types of MAC frame consists of a MAC header, a frame body, and a frame check sequence (FCS). The header contains control information used for defining the type of 802.11 MAC frame and providing information necessary to process the MAC frame. The frame body contains the data or information included in either management type or data type frames. The frame check sequence is a value representing a cyclic redundancy check (CRC) over all the fields of the MAC header and the frame body field.

Management frames are used to provide management services that may be specified by variable-length fields called information elements included in the MAC frame body. An information element includes three fields: its function is identified by an element ID field, its size is provided by a length field, and the information to deliver to the recipient is provided in a variable-length information field.

### 2. IEEE 802.11 Beacon, Probe Request and Response

### a. Beacon

The beacon frame is a management frame that is transmitted periodically to allow wireless devices to locate and identify a network. The beacon frame includes the fields: timestamp, beacon interval, and capability information. The timestamp contains the value of the device's synchronization timer at the time that the frame was transmitted. The capability information field is a 16-bit field that identifies the capabilities of the device. The information elements in a beacon frame are the service set identifier (SSID), the supported rates, one or more physical parameter sets, an optional contention-free parameter set, and an optional traffic indication map.

### i. Infrastructure BSS Networks with an Access Point

In an infrastructure BSS networks with an Access Point, beacon frames are used for enabling wireless devices to establish and maintain orderly communications. The beacon frames are transmitted by the Access Points at regular intervals and include a frame header and a body with various information, including a SSID identifying the name of a specific WLAN and a beacon interval specifying the intended time interval between two beacon transmissions. One purpose of the beacon frames is to inform the wireless devices about the presence of an Access Point in the area. The access point in an infrastructure BSS IEEE 802.11 WLAN network, may be a central hub that relays all communication between the mobile wireless devices (STAs) in an infrastructure BSS. If a STA in an infrastructure BSS wishes to communicate a frame of data to a second STA, the communication may take two hops. First, the originating STA may transfer the frame to the AP. Second, the AP may transfer the frame to the second STA. In an infrastructure BSS, the AP may transmit beacons or respond to probes received from STAs. After a possible authentication of a STA that may be conducted by the AP, an association may occur between the AP and a STA enabling data traffic to be exchanged with the AP. The Access Point in an Infrastructure BSS may bridge traffic out of the BSS onto a distribution network. STAs that are members of the BSS may exchange packets with the AP.

### ii. Ad Hoc IBSS Networks

The first ad hoc wireless device to become active establishes an IBSS and starts sending beacons to inform the other wireless devices about the presence of an ad hoc network in the area. Other ad hoc wireless devices may join the network after receiving a beacon and accepting the IBSS parameters, such as the beacon interval, found in the beacon frame.

Each wireless device that joins the ad hoc network may send a beacon periodically if it doesn't hear a beacon from another device within a short random delay period after the beacon is supposed to be sent. If a wireless device doesn't hear a beacon within the random delay period, then the wireless device assumes that no other wireless devices are active in the ad hoc network and a beacon needs to be sent.

A beacon signal is periodically transmitted from the ad hoc network. The beacon frame is transmitted periodically and includes the address of the sending device.

### b. Probe Request

The probe request frame is a management frame that is transmitted by a wireless device attempting to quickly locate a wireless local area network (LAN). It may be used to locate independent basic service sets (IBSSs), infrastructure basic service sets (BSSs) or mesh basic service sets (MBSSs) only or any of them, . It may be used to locate a wireless LAN with a particular SSID or to locate any wireless LAN. The probe request frame may contain a service attribute request.

For active scans, the wireless device either broadcasts or unicasts a probe request on the channel it is scanning. It may set the SSID in the probe request to a wildcard SSID or to a specific SSID value. It may set the BSSID in the probe request a wildcard BSSID or to a specific BSSID value. With these options the wireless device can look for any SSID or BSSID, any representative of a specific SSID or a specific BSSID. The wireless device will add any received beacons or probe responses to a cached BSSID scan list. For passive scans, the wireless device does not send a probe request, but instead, listens on a channel for a period of time and adds any received beacons or probe responses to its cached BSSID scan list. The wireless device may scan both infrastructure and ad hoc networks, regardless of the current setting of its network mode. The wireless device may use either the active or passive scanning methods, or a combination of both scanning methods. The wireless device performs the scan across all the frequency channels and bands that it supports.

### i. Infrastructure BSS Networks with an Access Point

The wireless device may transmit a probe request and receive a probe response from the access point in the BSS. The probe request is transmitted by a wireless device to obtain information from another station or access point. For example, a wireless device may transmit a probe request to determine whether a certain access point is available. In the infrastructure BSS, only the AP responds to probe requests. The probe response sent back by the AP contains a timestamp, beacon interval, and capability information. It also includes the SSID of the BSS, supported rates, and PHY parameters. The wireless device STA may learn that the access point AP will accept the STA's credentials.

Exemplary rules applied by the scanning wireless device (i.e. scanner) and the APs with active scanning are as follows:
1) Scanner (for each channel to be scanned):
   a. Transmit a probe request frame (or multiple of thereof) with the SSID and the BSSID fields set as per the scan command;
   b. Reset ProbeTimer to zero and start it upon the probe request transmission;
   c. If nothing is detected (any signal with high enough energy) on the channel before the ProbeTimer reaches MinChannelTime (a.k.a. Min_Probe_Response_Time), then go to scan the next channel (if any), else when the ProbeTimer reaches MaxChannelTime (i.e., Max_Probe_Response_Time), process all received probe responses and go to scan the next channel ( if any).
2) APs:
   a. An AP shall respond with a probe response only if:
      i. The Address 1 field in the probe request frame is the broadcast address or the specific MAC address of the AP; and
      ii. The SSID in the probe request is the wildcard SSID, the SSID in the probe request is the specific SSID of the AP, or the specific SSID of the AP is included in the SSID list element of the probe request, or the Address 3 field in the probe request is the wildcard BSSID or the BSSID of the AP.
   b. Some further conditions may be set as well for the generation of a probe response.

In general, the probe request transmitter specifies the conditions that wireless devices need to meet in order to respond to with a probe response. All wireless devices that fulfill the condition try to send a probe response frame. The active scanning mechanism defines the signaling.

### ii. Ad Hoc IBSS Networks

The effect of receiving a probe request is to cause the wireless device to respond with a probe response if the conditions indicated in the probe request are met. When a wireless device arrives within the communication range of any member of an ad hoc network, its probe request frame inquiry signals are answered by a member of the ad hoc network detecting the inquiry. A device in an ad hoc network that broadcasted the latest beacon in the network responds to the probe request frame inquiry signals with a probe response containing the address of the responding device. The probe response frame also includes the timestamp, beacon interval, capability information, information elements of the SSID, supported rates, one or more physical parameter sets, the optional contention-free parameter set, and the optional ad hoc network parameter set.

Once a device has performed an inquiry that results in one or more ad hoc network descriptions, the device may choose to join one of the ad hoc networks. The joining process may be a purely local process that occurs entirely internal to the wireless device. There may be no indication to the outside world that a device has joined a particular ad hoc network. Joining an ad hoc network may require that all of the wireless device's MAC and physical parameters be synchronized with the desired ad hoc network. To do this, the device may update its timer with the value of the timer from the ad hoc network description, modified by adding the time elapsed since the description was acquired. This will synchronize the timer to the ad hoc network. The BSSID of the ad hoc network may be adopted, as well as the parameters in the capability information field. Once this process is complete, the wireless device has joined the ad hoc network and is ready to begin communicating with the devices in the ad hoc network.

### c. Probe Response

The probe response sent back by a wireless device that met the conditions set by the received probe request contains a timestamp, beacon interval, and capability information. It also includes the SSID of the BSS, supported rates, and PHY parameters.

According to an example embodiment, standard spacing intervals are defined in the IEEE 802.11 specification, which delay a station's access to the medium, between the end of the last symbol of the previous frame and the beginning of the first symbol of the next frame. The short interframe space (SIFS), the shortest of the interframe spaces, may allow acknowledgement (ACK) frames and clear to send (CTS) frames to have access to the medium before others. The longer duration distributed coordination function (DCF) interframe space (IFS) or DCF Interframe Space (DIFS) interval may be used for transmitting data frames and management frames.

According to an example embodiment, after the channel has been released, IEEE 802.11 and before a probe response is transmitted, wireless devices normally employ a spectrum sensing capability during the SIFS interval or DIFS interval, to detect whether the channel is busy. A carrier sensing scheme may be used wherein a node wishing to transmit a probe response has to first listen to the channel for a predetermined amount of time to determine whether or not another node is transmitting on the channel within the wireless range. If the channel is sensed to be idle, then the node may be permitted to begin the transmission process. If the channel is sensed to be busy, then the node may delay its transmission of a probe response for a random period of time called the backoff interval. In the DCF protocol used in IEEE 802.11 networks, the stations, on sensing a channel idle for DIFS interval, may enter the backoff phase with a random value between 0 and a maximum value CWmin. The backoff counter may be decremented from this selected value as long as the channel is sensed idle for a predetermined time interval. After every received frame one may however wait for a DIFS before sensing the channel status and resuming backoff counter update.

### 3. Generic Advertisement Service (GAS)

IEEE 802.11u-2011 is an amendment to the IEEE 802.11-2007 base standard published as IEEE 802.11u-2011, Wireless LAN Medium Access Control (MAC) and Physical Layer (PHY) Specifications, Amendment 9: Interworking with External Networks, February 25, 2011 (incorporated herein by reference). IEEE 802.11u-2011 adds features to improve interworking with external networks. IEEE 802.11u-2011 amendment establishes MAC and physical layer PHY protocols for an interworking service to permit a wireless device to exchange information with an external network, to enable the selection of networks to connect to, and to enable access to emergency services. A GAS is specified in the IEEE 802.11u amendment to enable mobile wireless devices or STAs to discover the availability of information related to desired network services. For example, the GAS enables discovery of information about services provided in an infrastructure basic service set, information about local access services, information from available Subscription Service Providers (SSP) and/or Subscription Service Provider Networks (SSPNs) or other external networks. GAS enables a wireless device to transmit a generic advertisement service initial request frame to request information about network services from access points and it enables an access point to use a generic container, a GAS initial response frame, to advertise information about network services over an IEEE 802.11 network. The GAS protocol has been proposed to be updated to operate with broadcast request and response messages. Public action frames are used to transport the GAS initial request frame and the GAS initial response frame.

### 4. Wi-Fi Direct

The Wi-Fi Alliance has developed a Wi-Fi Peer-to-Peer technology named Wi-Fi Direct™ that is specified in the Wi-Fi Alliance Peer-to-Peer Specification, October 2010 (incorporated herein by reference). Wi-Fi Direct is also referred to herein as Peer-to-Peer (P2P) or Device-to-Device (D2D). Wi-Fi Direct enables IEEE 802.11a, g, or n devices to connect to one another, peer-to-peer, without prior setup or the need for wireless access points. Devices that support Wi-Fi Direct may discover one another and advertise available services. Wi-Fi Direct devices support typical Wi-Fi ranges and the same data rates as can be achieved with an 802.11a, g, or n infrastructure connection. When a device enters the range of the Wi-Fi Direct device, it may connect to it using the specified protocol.

Wi-Fi Direct enables wireless devices that support Wi-Fi Direct, to connect to one another, point-to-point, without joining an infrastructure network. Wireless devices that support the specification will be able to discover one another and advertise available services. Wi-Fi Direct devices will support typical Wi-Fi ranges and the same data rates as can be achieved with an infrastructure connection. Wi-Fi Direct provides point-to-point connections for networks by embedding a software access point into any Wi-Fi Direct devices.

Wi-Fi Direct-certified devices may create direct connections between each other without requiring the presence of a traditional Wi-Fi infrastructure network of an access point or router. Wi-Fi Direct Device Discovery and Service Discovery features allow users to identify available devices and services before establishing a connection, for example, discovering which Wi-Fi Direct devices have a printer. Wi-Fi Direct devices may use Wi-Fi Protected Setup to create connections between devices.

A Wi-Fi Direct device is capable of a peer-to-peer connection and may support either an infrastructure network of an access point or router or a peer-to-peer connection. Wi-Fi Direct devices may join infrastructure networks as stations (STAs). Wi-Fi Direct devices may connect by forming groups in a one-to-one or one-to-many topology. The groups functions in a manner similar to an infrastructure basic service set. A single Wi-Fi Direct device will be the group owner that manages the group, including controlling which devices are allowed to join and when the group is started or terminated. The group owner is responsible for responding to probe requests in a similar manner as an AP of an infrastructure BSS. The group owner will appear as an access point to legacy client devices. A significant difference between a group owner and an access point is that it is optional for the group owner to route and forward traffic between clients associated to it.

Wi-Fi Direct devices include Wi-Fi Protected Setup Internal Registrar functionality. A Wi-Fi Direct device may be a group owner of a group and may be able to negotiate which device adopts this role when forming a group with another Wi-Fi Direct device. A group may include both Wi-Fi Direct devices and legacy devices (i.e., that are not compliant with the Wi-Fi Alliance Peer-to-Peer Specification). Legacy devices may only function as clients within a group.

Wi-Fi Direct devices may support discovery mechanisms. Device discovery is used to identify other Wi-Fi Direct devices and establish a connection by using a scan similar to that used to discover infrastructure access points. If the target is not already part of a group, a new group may be formed. If the target is already part of a group, the searching Wi-Fi Direct device may attempt to join the existing group. Wi-Fi Protected Setup may be used to obtain credentials from the group owner and authenticate the searching Wi-Fi Direct device. Wi-Fi Direct devices may include service discovery that enables the advertisement of services supported by higher layer applications to other Wi-Fi Direct devices. Service discovery may be performed at any time (e.g. even before a connection is formed) with any other discovered Wi-Fi Direct device.

A Group may be created by a single Wi-Fi Direct device. When forming a connection between two Wi-Fi Direct devices, a group may be formed automatically and the devices may negotiate to determine which device is the group owner. The group owner may decide if this is a temporary (single instance) or persistent (multiple, recurring use) group. After a group is formed, a Wi-Fi Direct device may invite another Wi-Fi Direct device to join the group. The decision of whether or not to accept an invitation may be left to the invited Wi-Fi Direct device.

### 5. IEEE 802.11 Mesh Networks

IEEE 802.11s is an IEEE 802.11 amendment for mesh networking, defining how wireless devices may interconnect to create a WLAN mesh network. In IEEE 802.11s s networks, a wireless distribution system (DS) to which an access point (AP) connects may be replaced by a mesh of interoperable wireless links or multi-hop paths. End stations may establish interoperable peer-to-peer wireless links with neighboring end stations and APs in an 802.11 wireless mesh network. Mesh stations or mesh points may support mesh services in interoperable formation and operation of a Mesh Basic Service Set (MBSS). A mesh basic service set (MBSS) is a basic service set (BSS) that forms a self-contained network of mesh points, and which may be used as a distribution system (DS).

Mesh points that are members in an 802.11 WLAN mesh network, broadcast probe requests to discover candidate neighbors and obtain information about neighbors based on information elements (IEs) in probe response frames and in beacons. A mesh point performs passive or active scans to discover neighbor mesh points. A discovered mesh point may be considered a candidate peer mesh point if:
1. A beacon or probe response frame is received from the discovered mesh point;
2. The received beacon or probe response frame contains a mesh ID that matches the mesh ID of the scanning mesh point's mesh profile; and
3. The received beacon or probe response frame contains an appropriate mesh configuration element.

All mesh point devices have the same capability and each mesh point is capable of forward traffic. Each mesh point transmits Beacons as per beacon interval determined by each mesh point individually. Mesh points authenticate each other and provide a means to establish and manage links and peerings between mesh points. Peering is a logical relationship between two neighboring mesh points. A mesh network operates on the medium access control (MAC)-level and may operate as a bridge. Data type frame transmissions occur in links that a mesh point establishes with neighbor mesh points. A link is a result of a peering in which two neighboring mesh points authenticate each other. Actual data delivery occurs across paths that are established on top of links. Paths are either single-hop or multi-hop paths depending on the number of links along the path. Any higher layer, e.g. the internet protocol (IP) layer for networking, considers a mesh as a single hop and does not need to be aware of mesh operations.

A logical peering: relationship is established from one mesh point to another mesh point with a mesh peering management protocol. Mesh points participate with other mesh points in mesh functionalities such as path selection and forwarding. Mesh points may propagate mesh frames over multiple hops and connectivity is provided to all member mesh points.

IEEE 802.11 s networks are described in the IEEE P802.11s™/ Standard for Information Technology- Telecommunications and information exchange between systems- Local and metropolitan area networks- Specific requirements- Part 11: Wireless LAN Medium Access Control (MAC) and Physical Layer (PHY) specifications Amendment 10: Mesh Networking, dated September 2011, which is incorporated herein by reference.

### C. STOPPING RECEPTION OF DISCOVERY RESPONSES IN

### WIRELESS NETWORKS

Wireless local area networks (WLANs) are an example environment that may be used in the following example embodiments of the invention. However, example embodiments of the invention are applicable to other environments as well.

Many use cases for wireless local area networks (WLANs) may be improved by a faster initial link setup. For example, offloading traffic from a wide area network to a WLAN in an efficient way requires a fast initial link setup for the local area network.

Example WLANs that may be available for offloading traffic from a wide area network include, for example, IEEE 802.11, Digital Enhanced Cordless Telecommunications (DECT), and HiperLAN networks.

WLAN discovery mechanisms include passive and active scanning. A device or station that uses the discovery mechanisms is said to be in discovery state. In the passive scanning mode, a device or station in the discovery state listens to a channel for no longer than an interval determined for the scan. In practice, the passively scanning device looks for beacon frames from any wireless networks or representatives of wireless networks or alternatively beacon frames that meet a given criterion, such as a device address or network ID. When a device in the discovery state uses the active scanning, it generates probe request frames and transmits them to request APs to reply with probe response frames, as discovery responses, providing requested information.

The Generic Advertisement Service is an active discovery mechanism wherein mobile wireless devices or STAs in the discovery state may discover the availability of information related to desired network services. Generic Advertisement Service enables a wireless device to transmit a Generic Advertisement Service initial request frame to request information about network services from devices representing the network (as an example, access points) and it enables the devices to use a generic container, a Generic Advertisement Service initial response frame, as discovery responses, to advertise information about network services over an IEEE 802.11 network.

It may be beneficial for devices in the discovery state to reduce the level of traffic contributed by their discovery operations. In some example embodiments, a device in the discovery state may have already detected discovery responses from a responding network or access point and, thus, may no longer need to receive additional discovery responses from the already discovered network or access point. In other example embodiments, a device in the discovery state may have learned of the proximity of a network or access point, using a geolocation-based database.

In accordance with example embodiments of the invention, the device in the discovery state may transmit a wireless end frame message including an indication that the device in the discovery state may not listen to further wireless discovery responses from at least one of the one or more wireless devices.

In example embodiments, the end frame message may be a generalized management, control, or data frame including an information element that may contain an indication that specifies that the device in the discovery state will not listen to further wireless discovery responses from at least one of a network having a specific network ID, a mesh network having a specific Mesh ID or a network having a specific network topology.

In example embodiments, the wireless request message may be an IEEE 802.11 probe request or a generic advertisement service initial request. In example embodiments, one or more of the receiving wireless devices may be generalized as a hub device representing either an access point device in an infrastructure network or a group owner device in a peer-to-peer network, in accordance with example embodiments of the invention.

In example embodiments, the end frame message may specify attributes such as a device MAC address and/or a network SSID or BSSID. If one or more of the parameters in the end frame message matches those of a wireless node responsible for responding with a probe response or GAS response, then the wireless node may not send a probe response or GAS response.

In accordance with example embodiments of the invention, unnecessary discovery responses are eliminated, resulting in higher speed discovery and scanning, improved device discovery time, reduced network load, and a reduction in power consumption of the scanning device.

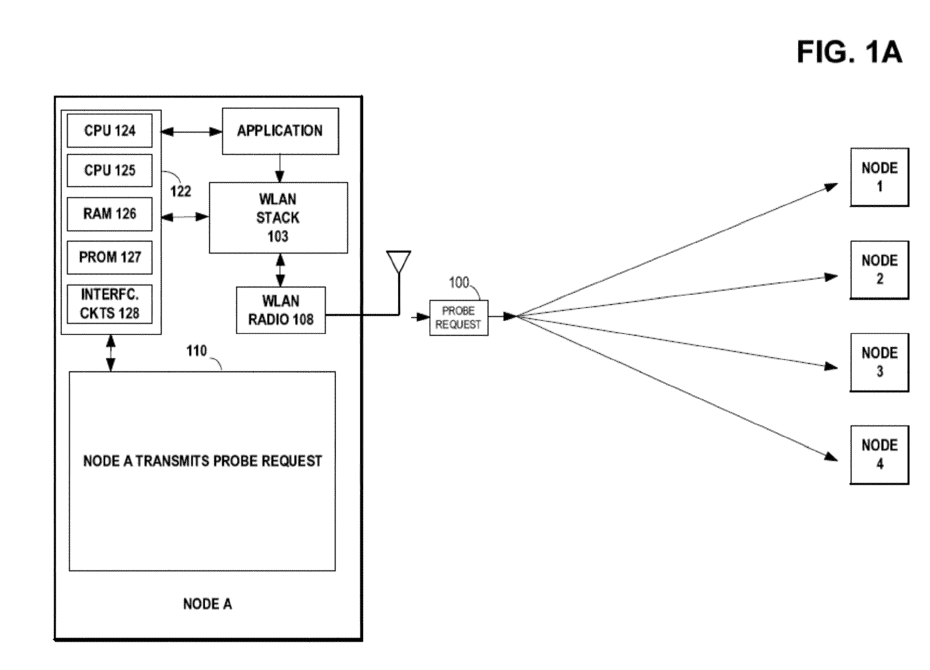

Figure 1A illustrates an example wireless network diagram of a wireless node in the discovery state, NODE A, broadcasting a first message 100, such as a probe request in active scanning, to a plurality of four receiving wireless nodes NODE 1 to NODE 4, in accordance with example embodiments of the invention. In example embodiments, the wireless node, NODE A, may be generalized as a mobile or fixed station device or a hub device representing either an access point device in an infrastructure network or a group owner (GO) device in a peer-to-peer (P2P) network, in accordance with example embodiments of the invention. In example embodiments, one or more of the four receiving wireless node devices NODE 1 to NODE 4, may be generalized as a mobile or fixed station device or a hub device representing either an access point device in an infrastructure network or a group owner (GO) device in a peer-to-peer (P2P) network, in accordance with example embodiments of the invention.

Examples of wireless devices embodying any of the several nodes, NODE A and NODE 1 to NODE 4 may be a modem smartphone configured as an access point so that it may share its wide area connection with other surrounding devices via a WLAN link. Examples of wireless devices may include mobile phones, smart phones, personal digital assistants, pagers, Bluetooth^{™} headsets, wireless microphones, wireless remote controls, wireless sensors, laptops, palmtops, tablet computers, appliances with an embedded wireless micro-controller, clothing with an embedded wireless micro-controller, automobile dashboards with an embedded wireless micro-controller, engine control computers with a wireless interface, video game consoles with a wireless interface, digital toys with a wireless interface, such as a wireless robot, and the like.

In accordance with an example embodiment of the invention, the actively scanning node, NODE A of Figure 1A is shown in functional block diagram form, which illustrates an example embodiment of the node's components. The NODE A, may include a processor 122, which includes a single core central processing unit (CPU) or multiple core CPU 124 and 125, a random access memory (RAM) 126, a programmable read only memory (PROM) 127, and interface circuits 128 to interface with one or more radio transceivers 108, battery or house power sources, keyboard, display, etc. The RAM and PROM may be removable memory devices such as smart cards, SIMs, WIMs, semiconductor memories such as RAM, ROM, PROMS, flash memory devices, etc.

In accordance with an example embodiment of the invention, an example WLAN protocol stack 103 may include the IEEE 802.11u protocol in NODE A. The protocol stack 103 may be computer code instructions stored in the RAM and/or PROM memory of the processors 122, which when executed by the central processing units (CPU), carry out the functions of the example embodiments of the invention.

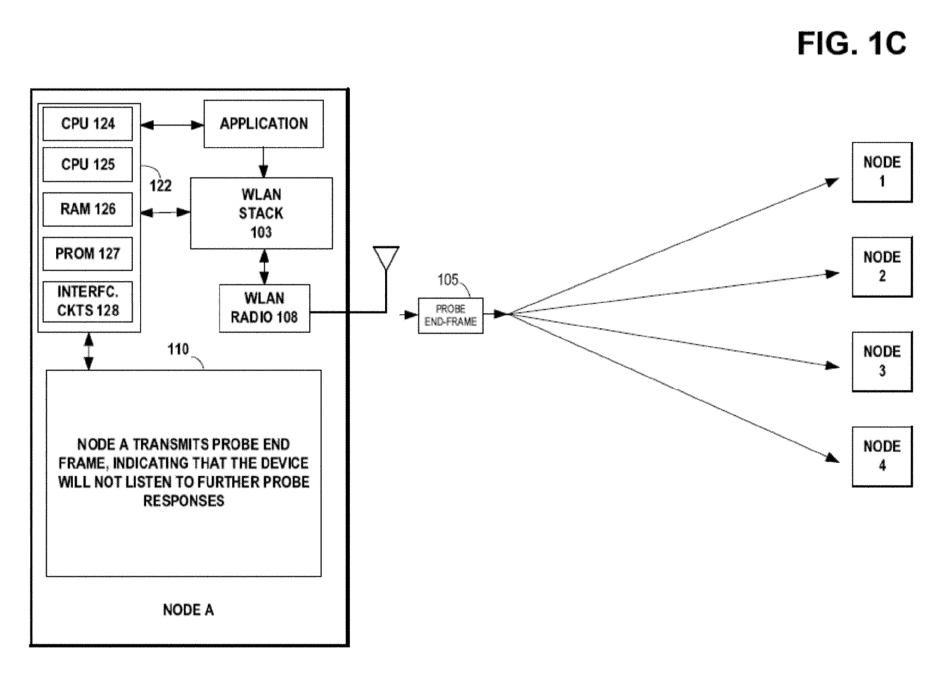

In accordance with an example embodiment of the invention, the buffer 110 of NODE A, which may be a partition of the RAM 126, is shown in Figures 1A, 1B, and 1C buffering instructions executable in the CPU to perform the following example sequential steps shown in buffer 110 of the sequence of Figures 1A, 1B, and 1C:
NODE A transmits probe request;
NODE A may or may not receive probe responses to its probe request;
NODE A stops receiving probe responses from the channel; and
NODE A transmits probe end frame, indicating that the device will no longer listen to further probe responses.

In example embodiments of the invention, the wireless node in the discovery state, NODE A, may transmit one or more first messages 100, such as a probe request in active scanning, to discover a wireless network matching one or more predetermined characteristics. A description of the one or more predetermined characteristics may be contained in NODE A for comparison with discovery data in a discovery response, such as a probe response, received as a reply to the first message 100. In example embodiments, the predetermined characteristics may simply be that there is another network. In example embodiments, the predetermined characteristics may be a device MAC address and/or a network SSID or BSSID. In example embodiments, the predetermined characteristics may be for an infrastructure BSS, with specified capability information, supported rates, PHY parameters, and/or authentication credentials. In example embodiments, the predetermined characteristics may be for an IBSS Ad Hoc Network with specified capability information, supported rates, one or more physical parameter sets, optional contention-free parameter set, and/or optional ad hoc network parameter set. In example embodiments, the predetermined characteristics may be for a mesh network with specified mesh ID and/or mesh configuration. In example embodiments, the predetermined characteristics may be for information about services provided in an infrastructure basic service set, information about local access services, information from available Subscription Service Providers (SSP) and/or Subscription Service Provider Networks (SSPNs) or other external networks, as provided in a GAS initial response frame advertising information about network services.

Figure 1B illustrates the example wireless network diagram of Figure 1A, of one receiving wireless node, NODE 2, of the plurality of four receiving wireless node devices, replying to the probe request message 100 with a probe response 101 discovery response with its discovery data, in accordance with an example embodiment of the invention. From none to all four receiving wireless nodes NODE 1 to NODE 4 may have responded. The probe response 101 from NODE 2 may satisfy the objectives for the scanning by NODE A for other networks.

In example embodiments of the invention, the scanning NODE A may listen to probe responses that are not addressed to NODE A and which are not in response to a probe request from NODE A.

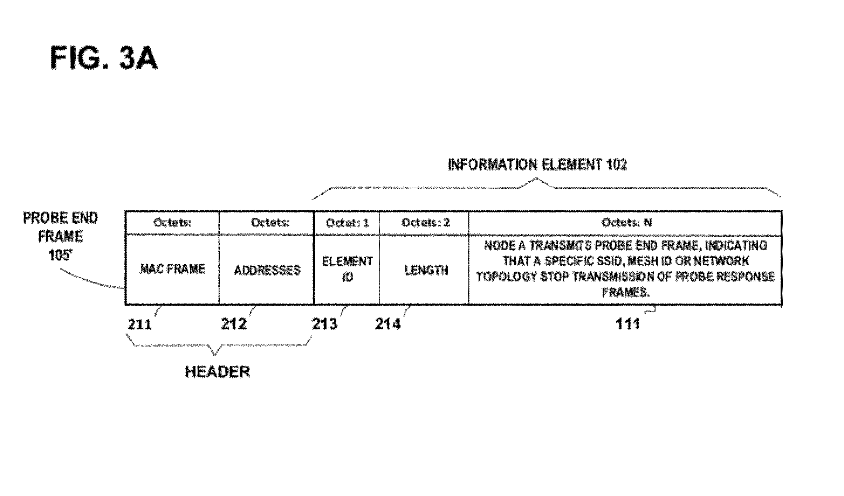

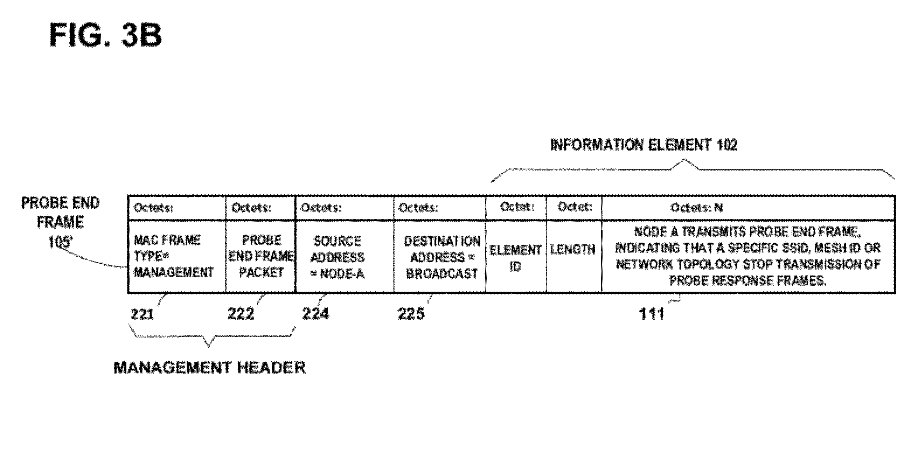

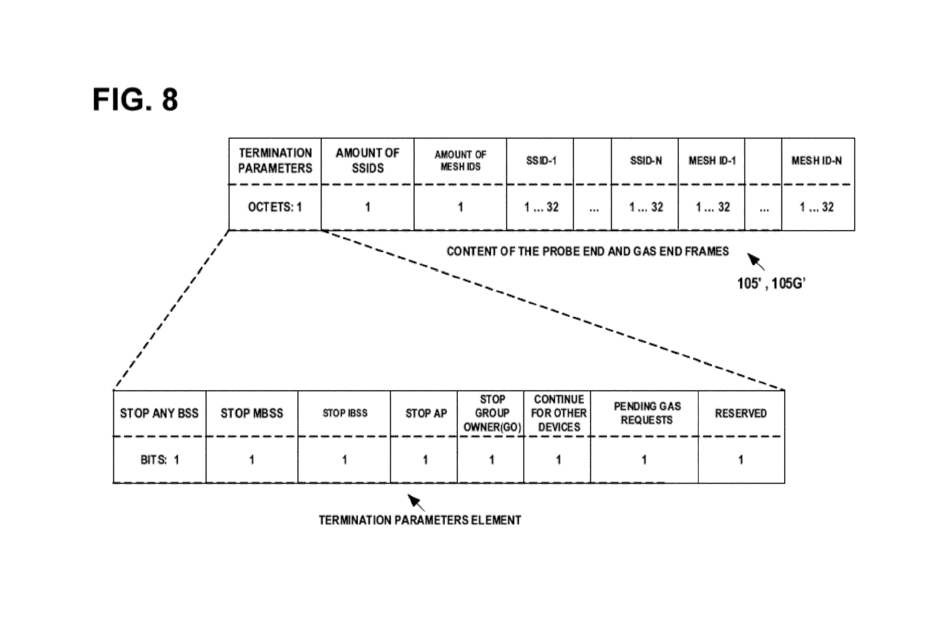

Figure 1C illustrates the example wireless network diagram of Figure 1B, wherein the wireless node in the discovery state, NODE A, wishes to terminate further responses to its probe request in order eliminate unnecessary responses, speedup the scanning operation, improve device discovery time, reduce network load, and reduce its power consumption. This is accomplished by transmitting a probe end frame message 105 to the plurality of four receiving wireless nodes. The probe end frame message 105 may include an indication that the scanning node, NODE A, will not listen to further wireless probe responses from at least one of the one or more wireless devices nodes NODE 1 to NODE 4, in accordance with an example embodiment of the invention. In example embodiments, the probe end frame message 105 may be a generalized management, control, or data frame including an indication that the scanning node, NODE A, will not listen to further wireless probe responses. In example embodiments, the probe end frame message 105 may be an IEEE 802.11 protocol data unit (PDU) or a generic advertisement service (GAS) protocol data unit, in accordance with an example embodiment of the invention. Figure 3A illustrates an example of the probe end frame message as a generalized frame body that includes an information element, in accordance with an example embodiment of the invention. Figure 3B illustrates an example of the probe end frame message in the IEEE 802.11 format, in accordance with an example embodiment of the invention. Figure 8 illustrates an example of the content of the probe end frame message, in accordance with an example embodiment of the invention.

In example embodiments of the invention, prior to transmitting the probe end frame message 105, the preceding probe request message 100 may have resulted in no responses received. In example embodiments of the invention, transmission of the probe end frame message 105 may be omitted.

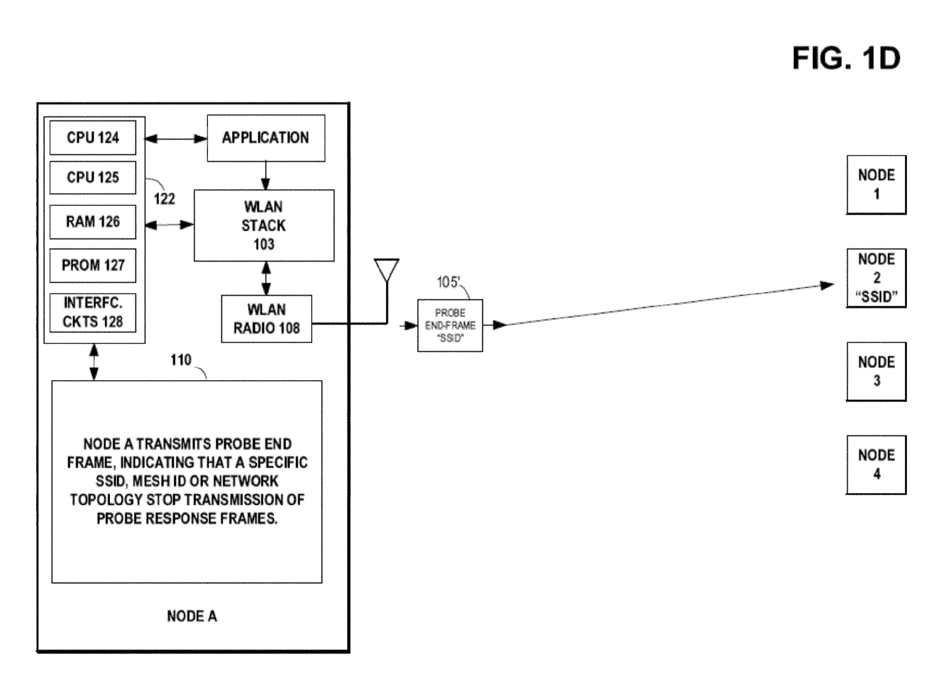

Figure 1D illustrates the example wireless network diagram of Figure 1C, wherein the wireless node in the discovery state, NODE A, transmits a probe end frame message 105' to one or more of the receiving wireless nodes, NODE 1 to NODE 4, the probe end frame message 105' specifying that the NODE A will not listen to further wireless probe responses from at least one of a network having a specific network ID, a mesh network having a specific Mesh ID or a network having a specific network topology, in accordance with an example embodiment of the invention. Figure 3A illustrates an example of the probe end frame message as a generalized frame body that includes an information element, in accordance with an example embodiment of the invention. Figure 3B illustrates an example of the probe end frame message in the IEEE 802.11 format, in accordance with an example embodiment of the invention. Figure 8 illustrates an example of the content of the probe end frame message, in accordance with an example embodiment of the invention.

In accordance with an example embodiment of the invention, the buffer 110 of NODE A, which may be a partition of the RAM 126, is shown in Figure 1D buffering instructions executable in the CPU to perform the following example step following the steps shown in buffer 110 of Figures 1A, 1B, and 1C:
NODE A transmits probe end frame, indicating that a specific SSID, Mesh ID or network topology stop transmission of probe response frames.

In an example embodiment of the invention, the scanning device NODE A may have a list of the potential other wireless devices within communication range. The scanning device NODE A may receive a plurality of probe responses until the first suitable other wireless device is found. If a probe response is received from any other wireless device or SSID in the list, the scanning device NODE A may transmit a probe end frame 105 to indicate to all four of the receiving wireless nodes, NODE 1 to NODE 4, that it is not receiving their pending probe responses. Alternately, in an example embodiment of the invention, the scanning device NODE A may transmit a probe end frame 105' to indicate to a receiving wireless node having a specific SSID, that NODE A will not receiving its pending probe responses.

In an example embodiment of the invention, scanning device NODE A may maintain a list of one or more predetermined wireless networks or nodes. NODE A may receive a plurality of probe responses 101 until at least a predetermined number of the networks listed on the list, is found. Then Node A may transmit the probe end frame message 105 in response to the finding. NODE A may set the probe end frame 105 to be transmitted after a delay, or it may transmit the probe end frame 105 after a large backoff delay value. The transmission of the probe end frame 105 may be selected to be delayed for a sufficiently long interval that most probe responses 101 are likely to have been received.

In an example embodiment of the invention, scanning device NODE A may have also other principles for the scanning:
○ If the scanning device NODE A is looking for a single response per SSID or Mesh ID, the scanning device NODE A may transmit the probe end frame and terminate probe response transmission from the specific SSID or Mesh ID.
○ The scanning device NODE A may have a preferred network topology. If any response from a preferred network topology is received (for instance a response from suitable AP in an infrastructure), the scanning device NODE A may terminate scanning in all other network topologies and continue to discover the optimal infrastructure AP.

In an example embodiment of the invention, the probe end frame indicates that the transmitter of scanning device NODE A will not listen to further probe responses, or that the probe request transmitter no longer requests probe responses from the specified BSS, as indicated in the probe end frame. The specific BSS enables the silencing of a specific BSS. In an example embodiment of the invention, only the BSS type and SSID fields may be present, without the BSSID. In some cases, one area may contain two or more IBSS networks that have the same SSID, but which are separate networks. For instance, the networks may be poorly named and by accident have the same name, for instance "Free Public WiFi". The probe end frame message 105' specifying the BSSID that should stop sending probe responses, may have the same silencing effect apply to both IBSS networks. The same may also apply to two or more mesh BSS that have the same mesh ID.

In an example embodiment of the invention, the probe responses may be transmitted after the probe end transmission, but these frames should not be retransmitted and acknowledgments will not be transmitted. The probe end transmitter may detect that multiple devices are potentially scanning the network to associate with other networks. The transmitter of the probe end may indicate in the probe end frame that it recommends the transmission of the pending probe responses.

In an example embodiment of the invention, the operation of the responding device transmitter (probe response transmitter) in the receiving device NODE 2, may include some of the following features:

In an example embodiment of the invention, after the receiving device NODE 2 has received a probe request that matches to its criteria for response, NODE 2 saves the transmitter address (TA) of the probe request frame and sets the probe response frame to transmission.

If NODE 2 has not yet transmitted the probe response frame and receives the probe end with TA matching to the MAC address of the probe request, NODE 2 may discard the saved TA of the probe request frame and either cancel the transmission of probe response or transmit the probe response without expecting an acknowledgment.

There may be several reasons to send the probe response after the probe end frame:
- NODE 2 may consider that other terminals exist that perform scanning. NODE 2 may provide its probe response for the benefit of these other terminals. For instance, the other terminal may have postponed its probe request transmission, if it receives a similar probe request from the media. The other terminal may receive probe responses that are transmitted in response to the similar probe request and it may avoid transmission of multiple similar probe response frames. However, in these cases, the requesting device may terminate its probe request before the other terminal has received the information it desires.
- The operator of NODE 2 may consider its discoverability as being business critical and NODE 2 may be instructed to always send a probe response when it has the opportunity.
- The probe request may have contained a recommendation for NODE 2 to transmit a probe response.

Figure 1E illustrates the example wireless network diagram of Figure 1B, wherein the wireless node in the discovery state, NODE A, transmits a probe end frame message 105" to one or more of the receiving wireless nodes, NODE 1 to NODE 4, the probe end frame message 105" specifying that the NODE A will not listen to further wireless probe responses from at least one of a network having a specific network ID, a mesh network having a specific Mesh ID or a network having a specific network topology. But, the probe end frame message 105" may contain a field "Continue for Other Devices" so that pending probe responses may be transmitted after the probe end frame message 105", in accordance with an example embodiment of the invention. The probe end frame message may contain a one bit field "Continue for Other Devices", which if set, indicates that pending probe responses are requested to be transmitted after the probe end frame message, in accordance with an example embodiment of the invention. In example embodiments of the invention the probe responses may be transmitted even if the bit is not set. Figure 3A illustrates an example of the probe end frame message as a generalized frame body that includes an information element, in accordance with an example embodiment of the invention. Figure 3B illustrates an example of the probe end frame message in the IEEE 802.11 format, in accordance with an example embodiment of the invention. Figure 8 illustrates an example of the content of the probe end frame message, in accordance with an example embodiment of the invention.

In accordance with an example embodiment of the invention, the buffer 110 of NODE A, which may be a partition of the RAM 126, is shown in Figure 1E buffering instructions executable in the CPU to perform the following example step following the steps shown in buffer 110 of Figures 1A, 1B, and 1C:
NODE A transmits probe end frame, indicating that a specific SSID, Mesh ID or network topology stop transmission of probe response frames.
The probe end frame may contain a field "Continue for Other Devices" so that pending probe responses may be transmitted after the probe end frame, but node A may not reply with an ACK and there may be no retransmissions by the other devices.

In accordance with an example embodiment of the invention, the indication included in the probe end frame 105" may specify that NODE A will not listen to further wireless responses from at least one of a network having a specific network ID, a mesh network having a specific Mesh ID or a network having a specific network topology. Further, the indication included in the probe end frame 105" may further specify that other wireless responses may be transmitted after the probe end frame 105", from at least one of another network, another mesh network or another network having a different network topology.

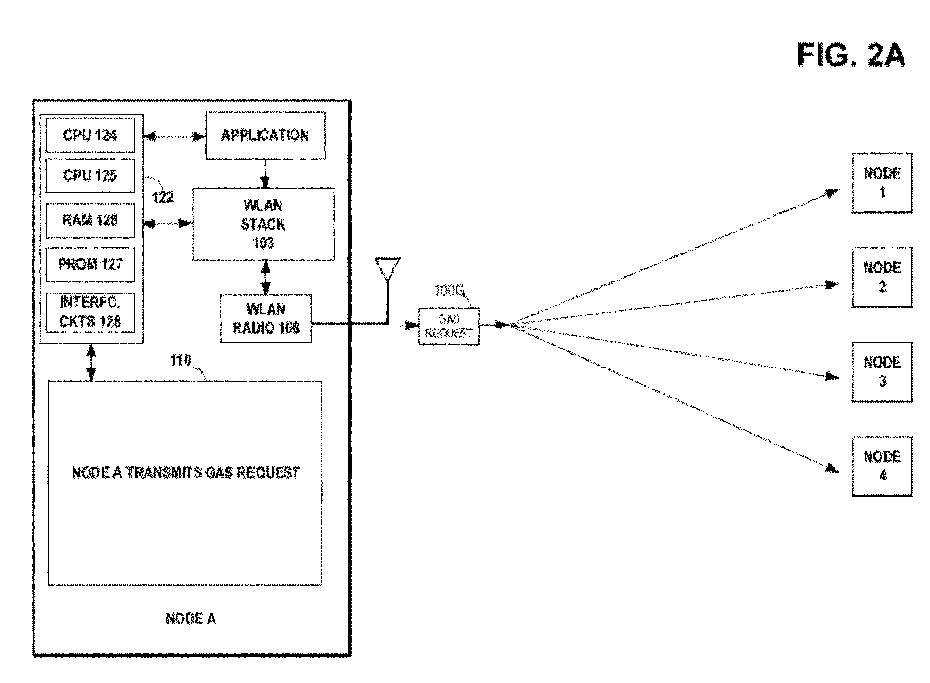

Figure 2A illustrates an example wireless network diagram of a wireless node in the discovery state, NODE A, broadcasting a Generic Advertisement Service (GAS) request message 100G to a plurality of four receiving wireless nodes NODE 1 to NODE 4, in accordance with example embodiments of the invention. The Generic Advertisement Service request message enables NODE A to discover the availability of information related to desired network services, for example, discovery of information about services provided in an infrastructure basic service set (BSS), information about local access services, information from available Subscription Service Providers (SSP) and/or Subscription Service Provider Networks (SSPNs) or other external networks. Generic Advertisement Service enables a wireless device to transmit a Generic Advertisement Service initial request frame over an IEEE 802.11 network. The GAS protocol has been proposed to be updated to operate with broadcast request and response messages.

Figure 2B illustrates the example wireless network diagram of Figure 2A, of one receiving wireless node, NODE 2, of the plurality of four receiving wireless node devices, replying to the GAS request message 100G with a GAS response 101 G discovery response, in accordance with an example embodiment of the invention. The Generic Advertisement Service initial response frame enables NODE 2 to advertise information about network services over an IEEE 802.11 network, for example, information about services provided in an infrastructure basic service set (BSS), information about local access services, information from available Subscription Service Providers (SSP) and/or Subscription Service Provider Networks (SSPNs) or other external networks.

In example embodiments of the invention, NODE A may listen to GAS responses that are not addressed to NODE A and which are not in response to a GAS request from NODE A.

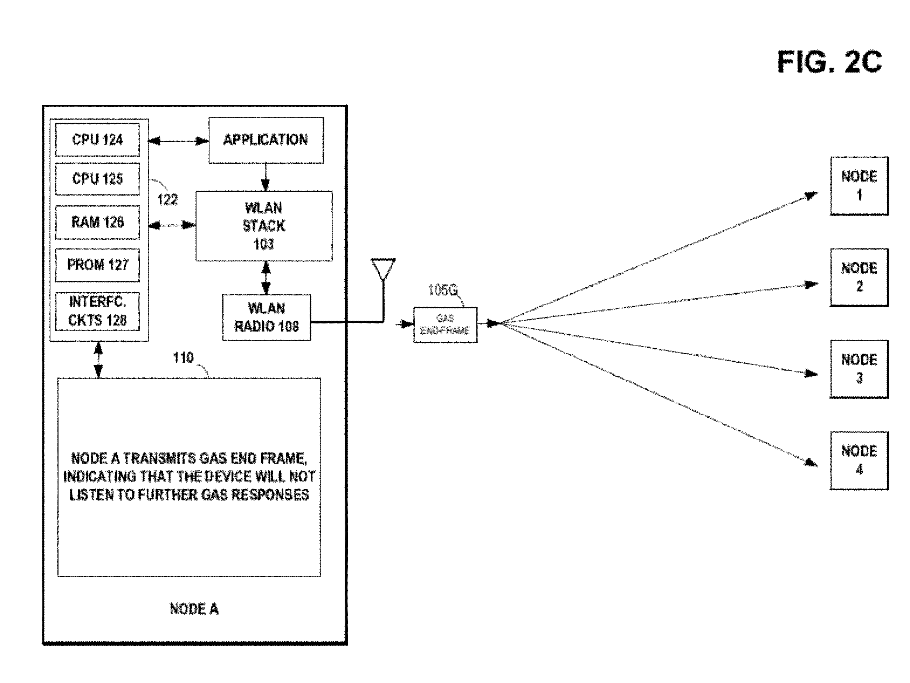

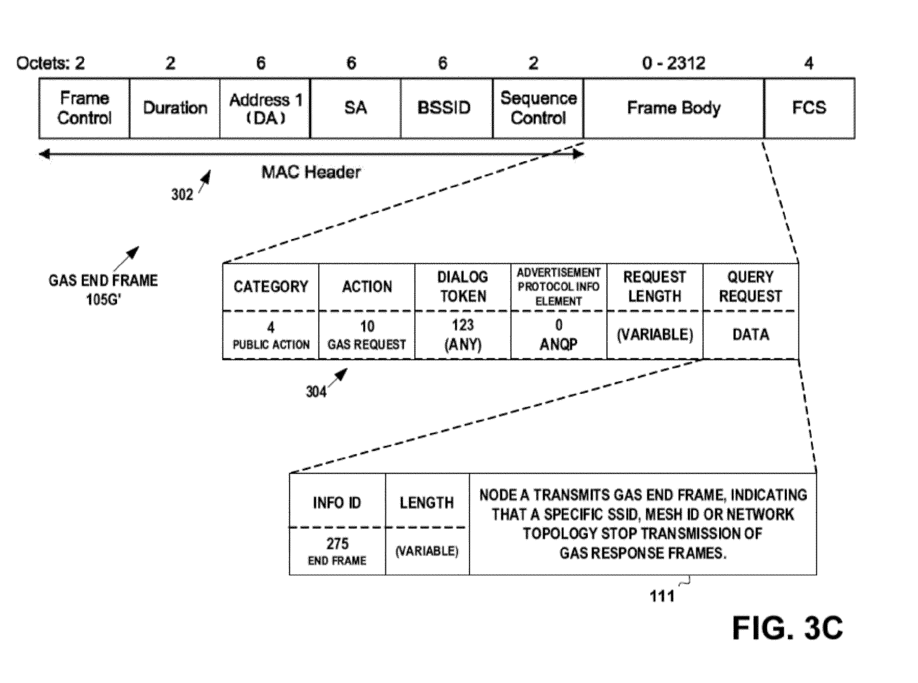

Figure 2C illustrates the example wireless network diagram of Figure 2B, wherein the wireless node in the discovery state, NODE A, broadcasts a GAS end frame message 105G to the plurality of four receiving wireless nodes, the message including an indication that the node, NODE A, will not listen to further wireless GAS responses from at least one of the one or more wireless devices nodes NODE 1 to NODE 4, in accordance with an example embodiment of the invention. Figure 3C illustrates an example of the Generic Advertisement Service (GAS) end frame message 105G', in accordance with an example embodiment of the invention. Figure 8 illustrates an example of the content of the GAS end frame message, in accordance with an example embodiment of the invention.

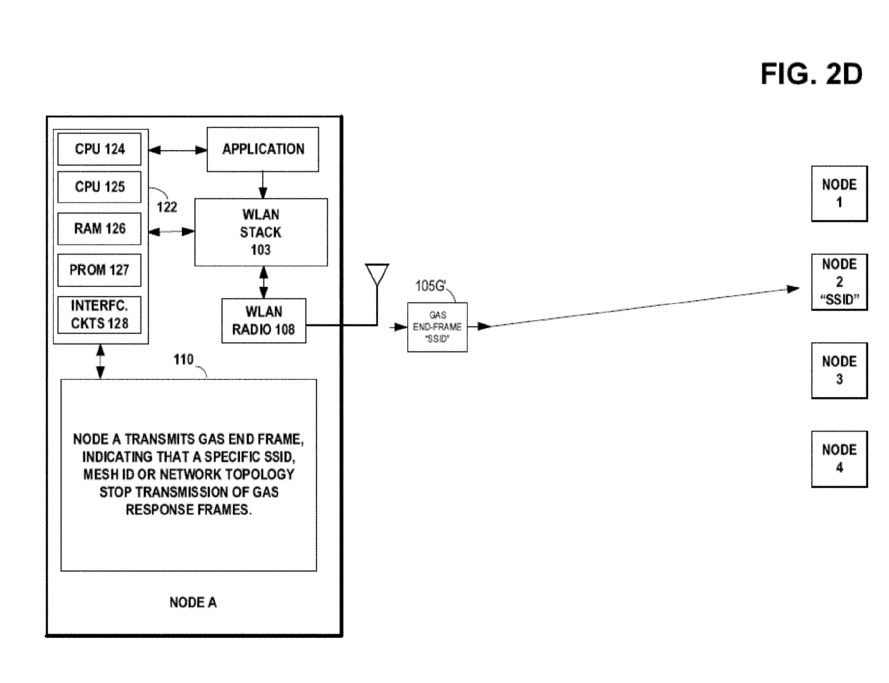

Figure 2D illustrates the example wireless network diagram of Figure 2B, wherein the wireless node in the discovery state, NODE A, transmits GAS end frame message 105G' to one or more of the receiving wireless nodes, NODE 1 to NODE 4, the GAS end frame message 105G' specifying that the NODE A will not listen to further wireless GAS responses from at least one of a network having a specific network ID, a mesh network having a specific Mesh ID or a network having a specific network topology, in accordance with an example embodiment of the invention. Figure 3C illustrates an example of the Generic Advertisement Service (GAS) end frame message 105G', in accordance with an example embodiment of the invention. Figure 8 illustrates an example of the content of the GAS end frame message, in accordance with an example embodiment of the invention.

Figure 2E illustrates the example wireless network diagram of Figure 2B, wherein the wireless node in the discovery state, NODE A, transmits GAS end frame message 105G" to one or more of the receiving wireless nodes, NODE 1 to NODE 4, the GAS end frame message 105G" specifying that the NODE A will not listen to further wireless GAS responses from at least one of a network having a specific network ID, a mesh network having a specific Mesh ID or a network having a specific network topology, but the GAS end frame message 105G" contains a field "Continue for Other Devices" so that pending GAS responses may be transmitted after the end frame message, in accordance with an example embodiment of the invention. Figure 3C illustrates an example of the Generic Advertisement Service (GAS) end frame message 105G', in accordance with an example embodiment of the invention. Figure 8 illustrates an example of the content of the GAS end frame message, in accordance with an example embodiment of the invention.

Figure 3A illustrates an example of the probe end frame message 105' broadcast by the wireless node in the discovery state, NODE A, as a generalized frame body that includes an information element 102, in accordance with an example embodiment of the invention. In example embodiments, the message 105' may be a generalized management, control, or data frame including an information element 102 that contains an indication that the node, NODE A, will not listen to further wireless probe responses from at least one of the one or more wireless devices nodes NODE 1 to NODE 4, in accordance with an example embodiment of the invention. The message 105' includes a header with MAC frame control information field 211 and address fields 212 and the information element 102. The information element 102 includes the element ID field 213, the length field 214, and the information field that contains an indication that the node, NODE A, will not listen to further wireless probe responses from at least one of the one or more wireless devices nodes NODE 1 to NODE 4. In example embodiments, the wireless message 105' may be a generalized management, control, or data frame including an information element that contains an indication that the node, NODE A, will not listen to further wireless probe responses from at least one of the one or more wireless devices nodes NODE 1 to NODE 4.

In example embodiments, the information element 102 may be freely used in management frames, depending on the information element definition. For example, if the information element is defined as an end frame information element, the information element may be primarily useful in frames transmitted with a broadcast or groupcast address to other devices. However, the information element 102 may also be used for informational purposes in beacons and data frames, depending on the information element definition.

Figure 3B illustrates an example of the probe end frame message 105' broadcast by the wireless node in the discovery state, NODE A, probe end frame message in the IEEE 802.11 format, in accordance with an example embodiment of the invention. Probe end frame message 105 includes an IEEE 802.11 management header that includes MAC frame type 221 indicating it is a management frame. Field 222 identifies the frame 105' as a probe end framepacket. Field 224 is the source address for NODE A and field 225 is the broadcast address. The payload portion of the probe request frame 100' includes the information element 102 that contains an indication that the node, NODE A, will not listen to further wireless probe responses from at least one of the one or more wireless devices nodes NODE 1 to NODE 4.

Figure 3C illustrates an example of the Generic Advertisement Service (GAS) end frame message 105G', in accordance with an example embodiment of the invention. The IEEE 802.11 MAC management frame 302 shown in Figure 3C may have the frame control field indicate that this is a management frame, the frame type and subtype fields are set to indicate an action frame. The frame body 304 category field that may indicate a public action frame to allow communications between an access point and a STA that operates in an unassociated state toward the access point. An action field value of 10 may indicate a GAS Initial Request, transmitted by a requesting STA to request information from another STA. The GAS protocol has been proposed to be updated to operate with broadcast request and response messages.

In accordance with an example embodiment of the invention, as shown in Figure 3C, when the public action field is set to value of 10 to indicate GAS end frame message 105G', access network query protocol (ANQP) information elements may be sent with query request data. In accordance with an example embodiment of the invention, the query request data may contain an indication that the node, NODE A, will not listen to further wireless probe responses from at least one of the one or more wireless devices nodes NODE 1 to NODE 4. The dialog token field may be set by the requesting station with any value, such as "123", to identify the GAS end frame message 105'. The GAS end frame message 105G' may include a length value for the length of the following query request field.

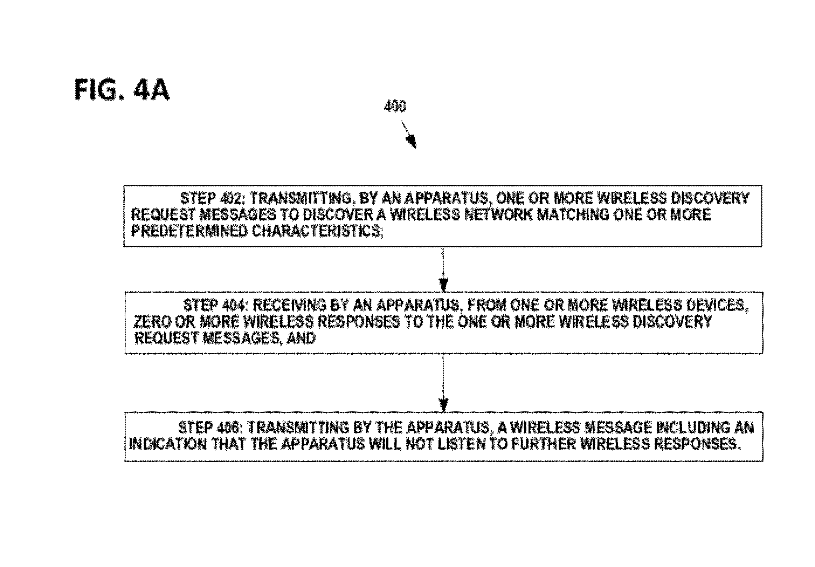

Figure 4A illustrates an example flow diagram of operational steps of an example embodiment of the procedure performed in the wireless node in the discovery state, NODE A, according to an embodiment of the present invention. Figure 4A illustrates an example embodiment of a flow diagram 400 for the process in the wireless node, NODE A. Figure 4A illustrates an example of steps in the procedure carried out by an apparatus, for example the wireless device in executing-in-place program code stored in the memory of the device. The steps in the procedure of the flow diagram may be embodied as program logic stored in the memory of the wireless device in the form of sequences of programmed instructions which, when executed in the microprocessor control logic of the device, carry out the functions of an exemplary disclosed embodiment. The steps may be carried out in another order than shown and individual steps may be combined or separated into component steps. Additional steps may be inserted into this sequence. The steps in the procedure are as follows:

Step 402: transmitting, by an apparatus, one or more wireless discovery request messages to discover a wireless network matching one or more predetermined characteristics;

Step 404: receiving by an apparatus, from one or more wireless devices, zero or more wireless responses to the one or more wireless discovery request messages, and

Step 406: transmitting by the apparatus, a wireless message including an indication that the apparatus will not listen to further wireless responses.

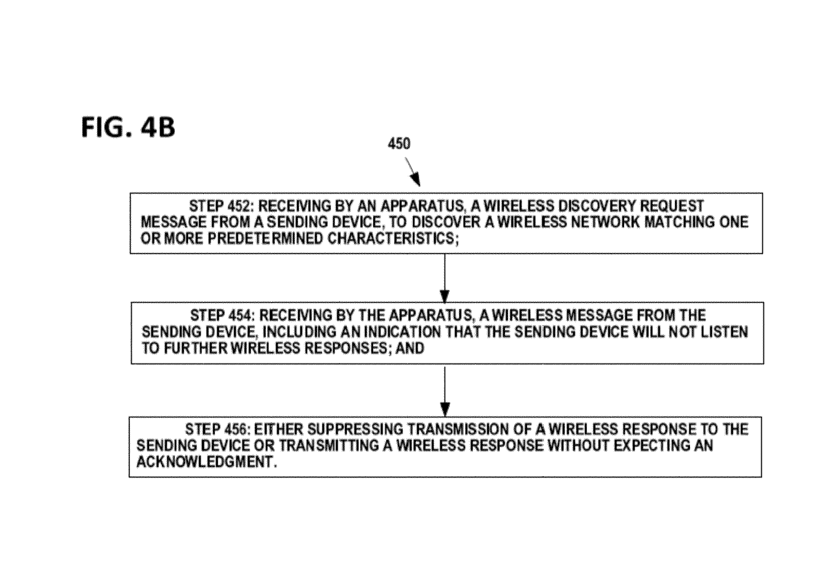

Figure 4B is an example flow diagram of operational steps of an example embodiment of the procedure performed in the receiving wireless node device NODE 2. Figure 4B illustrates an example embodiment of a flow diagram 450 for the process in the receiving wireless node device NODE 2. Figure 4B is an example of steps in the procedure carried out an apparatus, for example the wireless device in executing-in-place program code stored in the memory of the device. The steps in the procedure of the flow diagram may be embodied as program logic stored in the memory of the wireless device in the form of sequences of programmed instructions which, when executed in the microprocessor control logic of the device, carry out the functions of an exemplary disclosed embodiment. The steps may be carried out in another order than shown and individual steps may be combined or separated into component steps. Additional steps may be inserted into this sequence. The steps in the procedure are as follows:

Step 452: receiving by an apparatus, a wireless discovery request message from a sending device, to discover a wireless network matching one or more predetermined characteristics;

Step 454: receiving by the apparatus, a wireless message from the sending device, including an indication that the sending device will not listen to further wireless responses; and

Step 456: either suppressing transmission of a wireless response to the sending device or transmitting a wireless response without expecting an acknowledgment.

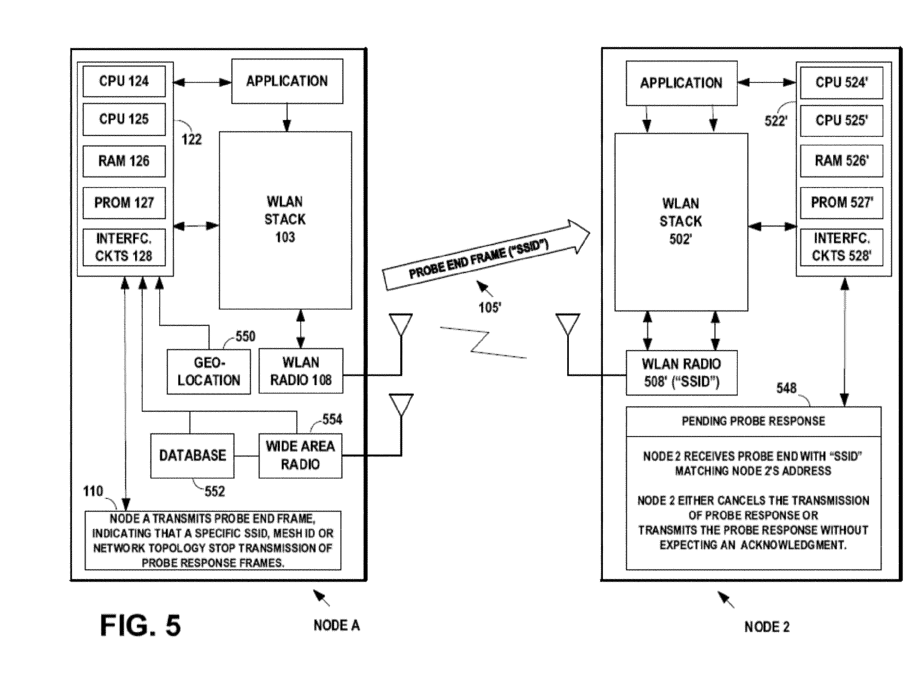

Figure 5 illustrates an example wireless network and functional block diagram of the wireless node in the discovery state, NODE A, and the receiving wireless node device NODE 2, with the wireless node, NODE A, transmitting a probe end frame 105' specifying that the NODE A will not listen to further wireless probe responses from a network having a specific network SSID, in accordance with an example embodiment of the invention. In example embodiments, the probe end frame 105' may be a generalized management, control, or data frame, in accordance with an example embodiment of the invention. In example embodiments, the probe end frame 105' may be have IEEE 802.11 frame format or a generic advertisement service (GAS) format, in accordance with an example embodiment of the invention. Examples of wireless devices embodying NODE A and/or NODE 2 may include mobile phones, smartphones, personal digital assistants, pagers, Bluetooth^{™} headsets, wireless microphones, wireless remote controls, wireless sensors, laptops, palmtops, tablet computers, appliances with an embedded wireless micro-controller, engine control computers with a wireless interface, video game consoles with a wireless interface, digital toys with a wireless interface, such as a wireless robot, and the like.

In accordance with an example embodiment of the invention, the wireless node in the discovery state, NODE A, and the receiving wireless node device NODE 2 are shown in Figure 5 in functional block diagram form to illustrate an example embodiment of their components. The receiving wireless node device NODE 2 may include a processor 522', which includes a single core central processing unit (CPU) or multiple core CPU 524' and 525', a random access memory (RAM) 526', a programmable read only memory (PROM) 527', and interface circuits 528' to interface with one or more radio transceivers 508', battery or house power sources, keyboard, display, etc. The RAM and PROM may be removable memory devices such as smart cards, SIMs, WIMs, semiconductor memories such as RAM, ROM, PROMS, flash memory devices, etc.

In accordance with an example embodiment of the invention, the wireless node in the discovery state, NODE A, may include a processor 122, which includes a dual core central processing unit 124 and 125, a random access memory (RAM) 126, a programmable read only memory (PROM) 127, and interface circuits 128 to interface with one or more radio transceivers 108, battery and other power sources, key pad, touch screen, display, microphone, speakers, ear pieces, camera or other imaging devices, etc. in the wireless node, NODE A. The RAM and PROM may be removable memory devices such as smart cards, SIMs, WIMs, semiconductor memories such as RAM, ROM, PROMS, flash memory devices, etc.

In accordance with an example embodiment of the invention, an example embodiment of the WLAN protocol stack 103 may include the IEEE 802.11u protocol in the wireless node, NODE A. An example embodiment of the WLAN protocol stack 502' may include the IEEE 802.11u protocol in the receiving wireless node device NODE 2. The protocol stacks 103 and 502' may be computer code instructions stored in the RAM and/or PROM memory of the respective processors 122 and 522', which when executed by the central processing units (CPU), carry out the functions of the example embodiments of the invention.

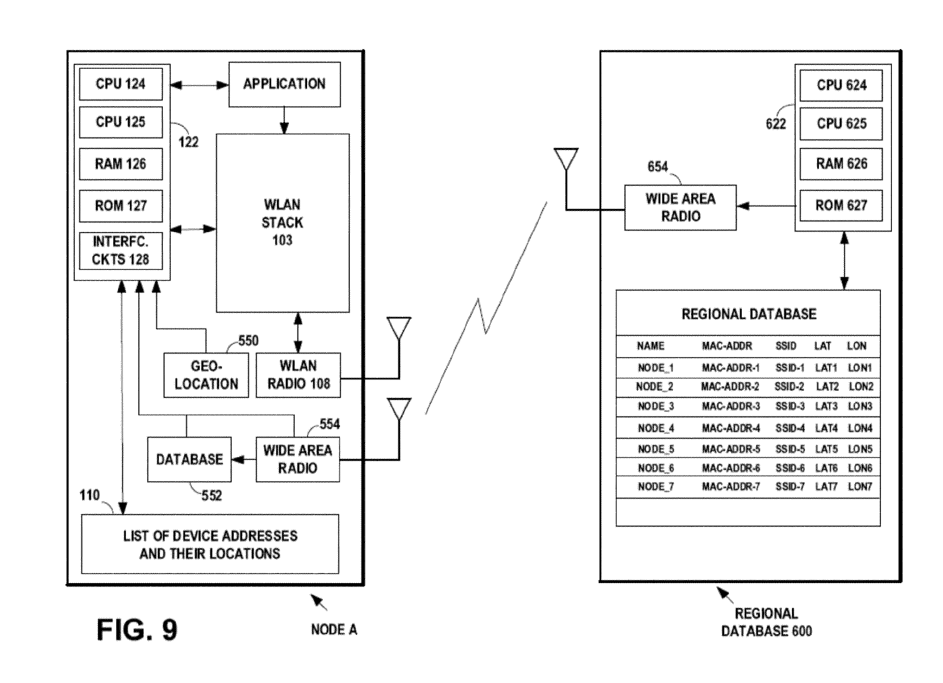

In an example embodiment of the wireless node in the discovery state, NODE A, a geolocation detector 550 establishes the current location of the wireless node, NODE A. The detected location may then be compared with location and address data in the local database 552 in the wireless node, NODE A, device, to determine if there are any other wireless devices in the area. For example, by using the database 552, if a receiving wireless node device NODE 2 is determined to be located in the area, then the address and location of the receiving wireless node device NODE 2 may be included in a list of addresses and locations, in accordance with an example embodiment of the invention. The contents of the database 552 may be updated via the wide area radio 554 providing a wireless link to a regional database, such as the regional database 600 of Figure 9. the one or more wireless devices are known from at least one of a location database, In accordance with an example embodiment of the invention, the receiving wireless node device NODE 2 may be known from at least one of a location database 552, a detection of a roaming partner name from an SSID, or at least one previous scanning.

In accordance with an example embodiment of the invention, the buffer 548 of NODE 2, which may be a partition of the RAM 526', is shown in Figure 5 buffering instructions executable in the CPU to perform the following example steps:
NODE 2 receives probe end with "SSID" matching NODE 2's address NODE 2 selects to either cancel the transmission of probe response or transmit the probe response without expecting an acknowledgment.

The computer program code in the RAM 526', when executed by the processor 524', causes Node 2 to read an SSID value in the probe end 105' matching NODE 2's address, which specifies that NODE A will not listen to further wireless responses from NODE 2. Then, the computer program code in the RAM 526', when executed by the processor 524', causes Node 2 to select to either suppress transmission of the wireless response to NODE A or transmit the wireless response without expecting an acknowledgment.

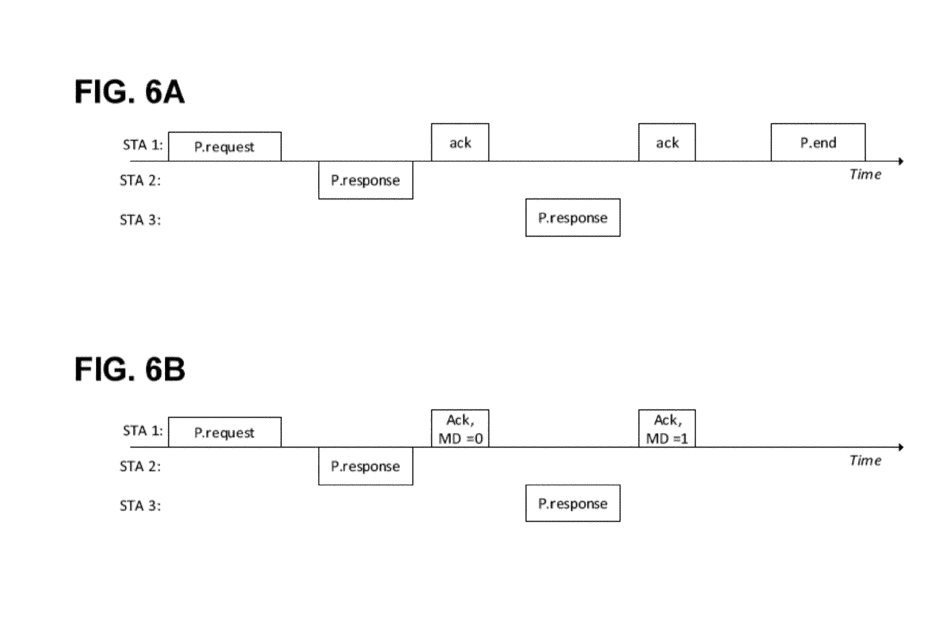

Figure 6A is an example timing diagram for a probe end frame message, in accordance with an example embodiment of the invention. STA1 in active scanning mode, broadcasts a probe request. STA2 sends a probe response to STA1's probe request. STA1 replies with an acknowledgement to STA2's probe response. This is followed by STA3 sending a probe response to STA1's probe request. STA1 replies with an acknowledgement to STA3's probe response. Then STA1 broadcasts a probe end frame. There are no further responses to STA1's probe request.

Figure 6B is an example timing diagram for a "More Data" field in an acknowledgement ACK frame to terminate a probe response, in accordance with an example embodiment of the invention. STA1 in active scanning mode, broadcasts a probe request. STA2 sends a probe response to STA1's probe request. STA1 replies to STA2's probe response with an acknowledgement ACK that includes the "More Data" parameter set to "0". This is followed by STA3 sending a probe response to STA1's probe request. STA1 replies to STA3's probe response with an acknowledgement ACK that includes the "More Data" parameter set to "1", which has the effect of a probe end frame. There are no further responses to STA1's probe request.

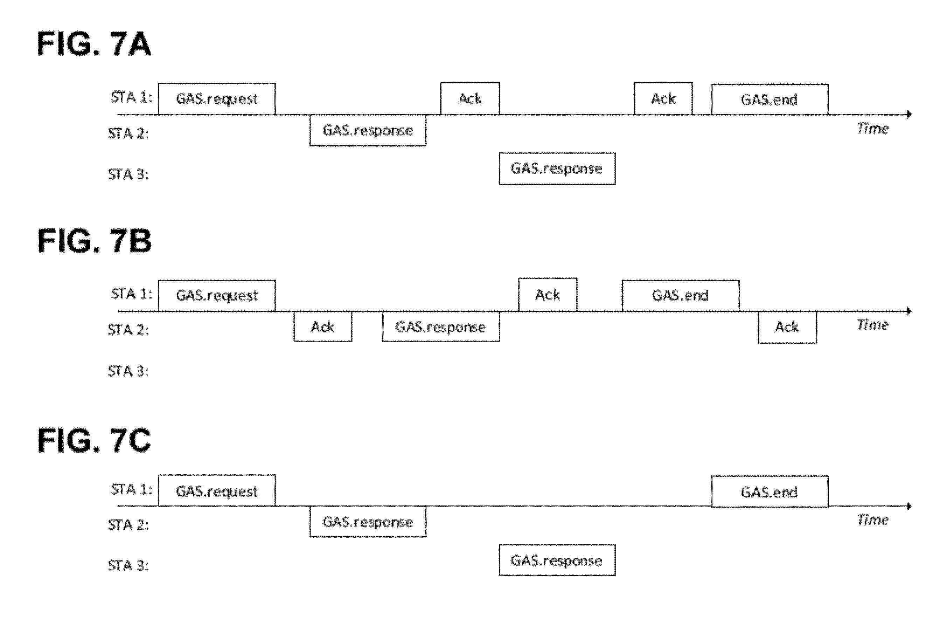

Figure 7A is an example timing diagram for a GAS request transmitted to a broadcast address and the requesting device transmitting a GAS end frame to indicate that it will not listen to further pending GAS responses, in accordance with an example embodiment of the invention. STA1 in active scanning mode, broadcasts a GAS request. STA2 sends a GAS response to STA1's GAS request. STA1 replies with an acknowledgement to STA2's GAS response. This is followed by STA3 sending a GAS response to STA1's GAS request. STA1 replies with an acknowledgement to STA3's GAS response. Then STA1 broadcasts a GAS end frame. There are no further responses to STA1's GAS request.

Figure 7B is an example timing diagram for a delayed GAS response that indicates that the device should retransmit the GAS request after a specified duration, and a GAS end frame indicates that the requestor will not transmit GAS request again after the duration, in accordance with an example embodiment of the invention. STA1 in active scanning mode, broadcasts a GAS request. STA2 replies with an acknowledgement to STA1's GAS request, but does not reply with a GAS response until after a delay. STA1 replies with an acknowledgement to STA2's delayed GAS response. Then STA1 broadcasts a GAS end frame. STA2 replies with an acknowledgement to STA1's GAS end frame. There are no further responses to STA1's GAS request.

Figure 7C is an example timing diagram for a GAS request transmitted to a broadcast address and two devices replying with GAS responses, followed by a GAS end frame, in accordance with an example embodiment of the invention. STA1 in active scanning mode, broadcasts a GAS request. STA2 sends a GAS response to STA1's GAS request. This is followed by STA3 sending a GAS response to STA1's GAS request. Then STA1 broadcasts a GAS end frame. There are no further responses to STA1's GAS request.

Figure 8 illustrates an example of the content of the probe end frame message 105' and 105" or the GAS end frame message 105G' and 105G", in accordance with an example embodiment of the invention. The probe end frame is a management frame that is transmitted by the probe request transmitter. The probe end frame is addressed to an individual or broadcast address. The GAS end frame is a management frame that is transmitted by the GAS request transmitter. GAS end frame is addressed to an individual or broadcast address. The probe end and GAS end frames have unique action management frame types, but the frames may consist of the same information elements, as shown in Figure 8.

In an example embodiment of the invention, the termination parameters of the probe end frame message 105' and 105" or the GAS end frame message 105G' and 105G' 'are shown in Figure 8. The termination parameters in the GAS end frame terminate the GAS responses transmission and the termination parameters in the probe end frame terminate the probe responses transmission. The content of the frames is explained for probe end frames. The explanation for GAS end frames is similar, but the probe fields would be replaced by GAS fields.

The "Stop Any BSS" termination parameter field is set to 1 to indicate that the transmitting STA will not listen to further probe responses from any BSS type and if more probe responses are addressed to probe end transmitter, no retransmissions may be performed. Otherwise, the field is set to 0.

The "Stop MBSS" termination parameter field is set to 1 to indicate that the transmitting STA does not desire to receive probe responses from any STA in mesh BSS (MBSS) and otherwise set to 0.

The "Stop IBSS" termination parameter field is set to 1 to indicate that the transmitting STA does not desire to receive probe responses from any STA in independent BSS (IBSS) and otherwise set to 0.

The "Stop AP" termination parameter field is set to 1 to indicate that the transmitting STA does not desire to receive probe responses from any AP and otherwise set to 0.

The "Stop Group Owner (GO)" termination parameter field is set to 1 to indicate that the transmitting STA does not desire to receive probe responses from any GO and otherwise set to 0.

The "Continue for Other Devices" termination parameter field set to 1 indicates that the transmitting STA recommends continuing transmitting the probe responses to other STAs and otherwise set to 0.

The "Pending GAS Requests" termination parameter field is set to 1 to indicate that the requesting STA will transmit GAS request after the duration specified in received GAS response and otherwise set to 0. The Pending GAS request does not affect currently scheduled responses. In probe end frames the Pending GAS requests field is reserved.

The "Amount of SSIDs" field indicates the amount of SSIDs from which no more probe responses are transmitted.

The "Amount of mesh IDs" field indicates the amount of mesh IDs from which no more probe responses are transmitted.

The "SSIDs" indicates the SSIDs of the networks from which no more probe responses are transmitted.

The "Mesh IDs" indicates the mesh IDs of the networks from which no more probe responses are transmitted.

Other example embodiments of the invention to terminate probe response and GAS response transmission, may include the probe request or GAS request frame containing a max_probe_response_time field that may indicate the duration that the requesting device's transmitter is available to receive GAS .responses or probe responses. The requesting device may remain available for the max_probe response-time it has indicated. If the response is not transmitted within the duration, no acknowledgment and retransmission for the frame is assumed. During the max_probe_response_time, the requesting device may transmit a probe end or GAS end frame.

Figure 9 illustrates the example wireless network and functional block diagram of Figure 5, of the wireless node in the discovery state, NODE A, and a regional database 600 containing data representing the geographic locations of receiving wireless nodes NODE 1 to NODE 4 and their addresses. The wireless node, NODE A, and the regional database 600 communicate over a wide area wireless network, in accordance with an example embodiment of the invention. The wide area wireless network may be, for example, an IEEE 802.16h wireless metropolitan area network (WMAN) (IEEE Std 802.16h-2010) or a cellular telephone network. The contents of the local database 552 in wireless node, NODE A, may be updated via the wide area radio 654 in the regional database 600.

The regional database 600 may include a processor 622, which includes a single core central processing unit (CPU) or multiple core CPU 624 and 625, a random access memory (RAM) 626, a read only memory (ROM) 627. Buffer 630, which may be a partition of the RAM 626 in regional database 600, buffers the data representing the geographic locations of the nodes and their addresses.

In an example embodiment of the wireless node in the discovery state, NODE A, a geolocation detector 550 establishes the current location of the wireless node, NODE A. The detected location may then be compared with location and address data in the local database 552 in the wireless node, NODE A, device, to determine if there are any other wireless devices in the area. For example, by using the database 552, if a receiving wireless node device NODE 2 is determined to be located in the area, then the address and location of the receiving wireless node device NODE 2 may be included in a list of addresses and locations, in accordance with an example embodiment of the invention. The contents of the database 552 may be updated via the wide area radio 554 providing a wireless link to a regional database, such as the regional database 600 of Figure 9.

The regional database 600 may be part of a hierarchical distributed database referred to as the territory domain system. The territory domain system enables locating and identifying the geographic area of specific hosting entities, related services and information required to access the hosting entities and their services. The communication territories and interference territories are unique geographical areas that are managed by a server associated with the corresponding geographic area, in the territory domain system.

Example embodiments of the invention are also applicable to the Bluetooth™ basic rate/enhanced data rate (BR/EDR) communication technology. A Bluetooth™ BR/EDR device in the discovery state may transmit inquiry request packets and then it may listen for inquiry response packets from a Bluetooth™ BR/EDR responding device containing the responding device's address, clock, and class of the device. An inquiry response packet may be followed by an extended inquiry response (EIR) packet that may be used to provide additional information during the inquiry response procedure, for example a local name and a list of supported services of the Bluetooth™ BR/EDR responding device.

In accordance with example embodiments of the invention, the Bluetooth™ BR/EDR device in the discovery state may reduce the level of traffic contributed by its discovery operations. The Bluetooth™ BR/EDR device in the discovery state may have already detected inquiry response packets and extended inquiry response (EIR) packets from the responding Bluetooth™ BR/EDR device and, thus, may no longer need to receive additional discovery responses from the already discovered Bluetooth™ BR/EDR device or its network. In accordance with example embodiments of the invention, the Bluetooth™ BR/EDR device in the discovery state may transmit a wireless end frame message including an indication that the Bluetooth™ BR/EDR device in the discovery state may not listen to further inquiry response packets or extended inquiry response (EIR) packets from at least the responding Bluetooth™ BR/EDR device.

Example embodiments of the invention are also applicable to the Bluetooth™ Low Energy (LE) communication technology. The advertising channel of the Bluetooth™ LE protocol may be used by a device in the discovery state (i.e., the Scanning State) to send a scanning request packet, SCAN_REQ, that includes the sender's device address and the address of the intended receiving device to which this scanning request packet is addressed. The receiving device in the Advertising State may respond on the advertising channel with a scanning response packet, SCAN_RSP, that includes advertising data and the advertising responder's device address.

In accordance with example embodiments of the invention, the Bluetooth™ LE device in the discovery state may reduce the level of traffic contributed by its discovery operations. The Bluetooth™ LE device in the discovery state may have already detected scanning response packets, SCAN_RSP, that include advertising data and the advertising responder's device address from the responding Bluetooth™ LE device and, thus, may no longer need to receive additional scanning response packets from the already discovered Bluetooth™ LE device or its network. In accordance with example embodiments of the invention, the Bluetooth™ LE device in the discovery state may transmit a wireless end frame message including an indication that the Bluetooth™ LE device in the discovery state may not listen to further scanning response packets, SCAN_RSP, from at least the responding Bluetooth™ LE device.

The features described herein may also be employed in other communication technologies, such as Wireless USB (WUSB), Ultra Wide-band (UWB), ZigBee (IEEE 802.15.4, IEEE 802.15.4a), HiperLAN Type 1, HiperLAN Type 2, and ultra-high frequency radio frequency identification (UHF RFID) technologies.

In accordance with example embodiments of the invention, unnecessary discovery requests are eliminated, resulting in higher speed discovery and scanning, improved device discovery time, reduced network load, and a reduction in power consumption of the discovering device. Consequently one also eliminates unnecessary responses by aborting sending one's own requests.

Using the description provided herein, the embodiments may be implemented as a machine, process, or article of manufacture by using standard programming and/or engineering techniques to produce programming software, firmware, hardware or any combination thereof.

Any resulting program(s), having computer-readable program code, may be embodied on one or more computer-usable media such as resident memory devices, smart cards or other removable memory devices, or transmitting devices, thereby making a computer program product or article of manufacture according to the embodiments. As such, the terms "article of manufacture" and "computer program product" as used herein are intended to encompass a computer program that exists permanently or temporarily on any computer-usable, non-transitory medium.

As indicated above, memory/storage devices include, but are not limited to, disks, optical disks, removable memory devices such as smart cards, SIMs, WIMs, semiconductor memories such as RAM, ROM, PROMS, etc. Transmitting mediums include, but are not limited to, transmissions via wireless communication networks, the Internet, intranets, telephone/modem-based network communication, hard-wired/cabled communication network, satellite communication, and other stationary or mobile network systems/communication links.

Although specific example embodiments have been disclosed, a person skilled in the art will understand that changes can be made to the specific example embodiments without departing from the scope of the invention. For instance, the features described herein may be employed in other networks beside the networks disclosed herein.

## Claims

1. A method comprising:
transmitting, by an apparatus, one or more wireless discovery request messages to discover a wireless network matching one or more predetermined characteristics;
receiving by an apparatus, from one or more wireless devices, zero or more wireless responses to the one or more wireless discovery request messages, and
transmitting by the apparatus, a wireless message including an indication that the apparatus will not listen to further wireless responses.

2. The method of claim 1, further comprising:
maintaining by the apparatus, a list of one or more predetermined wireless network characteristics;
receiving by the apparatus, the wireless responses until a wireless network having one or more of the predetermined wireless network characteristics is found; and
transmitting by the apparatus, the wireless message in response to the finding.

3. The method of claim 1, further comprising:
maintaining a list of one or more predetermined wireless networks;
receiving by the apparatus, the wireless responses until at least a predetermined number of the one or more of wireless networks listed on the list, is found; and
transmitting by the apparatus, the wireless message in response to the finding.

4. The method of any of the preceding claims, further comprising:
wherein the indication included in the wireless message specifies that the apparatus will not listen to further wireless responses from at least one of a network having a specific network ID, a mesh network having a specific Mesh ID or a network having a specific network topology.

5. A computer program comprising computer readable program code configured to cause performing of the method of any of the preceding claims when said program is run on a computer.

6. A computer program according to claim 5, wherein the computer program is a computer program product comprising a computer-readable medium bearing computer program code embodied therein for use with a computer.

7. An apparatus, comprising:
means for transmitting one or more wireless discovery request messages to discover a wireless network matching one or more predetermined characteristics;
means for receiving from one or more wireless devices, zero or more wireless responses to the one or more wireless discovery request messages, and
means for transmitting a wireless message including an indication that the apparatus will not listen to further wireless responses.

8. The apparatus of claim 7, further comprising:
wherein the apparatus is one of an access point device, a mesh point device, or a station.

9. A method, comprising:
receiving by an apparatus, a wireless discovery request message from a sending device, to discover a wireless network matching one or more predetermined characteristics;
receiving by the apparatus, a wireless message from the sending device, including an indication that the sending device will not listen to further wireless responses; and
either suppressing transmission of a wireless response to the sending device or transmitting a wireless response without expecting an acknowledgment.

10. The method of claim9, further comprising:
reading an indication included in the wireless message that specifies that the sending device will not listen to further wireless responses from at least one of a network having a specific network ID, a mesh network having a specific Mesh ID or a network having a specific network topology; and
selecting to either suppress transmission of the wireless response to the sending device or transmit the wireless response without expecting an acknowledgment, if the apparatus is part of at least one of a network having the specific network ID, a mesh network having the specific Mesh ID or a network having the specific network topology.

11. A computer program comprising computer readable program code configured to cause performing of the method of any of the claims 9-10 when said program is run on a computer.

12. A computer program according to claim 11, wherein the computer program is a computer program product comprising a computer-readable medium bearing computer program code embodied therein for use with a computer.

13. An apparatus, comprising:
means for receiving a wireless discovery request message from a sending device, to discover a wireless network matching one or more predetermined characteristics;
means for receiving a wireless message from the sending device, including an indication that the sending device will not listen to further wireless responses; and
either suppress transmission of a wireless response to the sending device or transmit a wireless response without expecting an acknowledgment.

14. The apparatus of claim 13, further comprising:
means for reading an indication included in the wireless message that specifies that the sending device will not listen to further wireless responses from at least one of a network having a specific network ID, a mesh network having a specific Mesh ID or a network having a specific network topology; and
means for selecting to either suppress transmission of the wireless response to the sending device or transmit the wireless response without expecting an acknowledgment, if the apparatus is part of at least one of a network having the specific network ID, a mesh network having the specific Mesh ID or a network having the specific network topology.

15. The apparatus of any of the claims 13-14, further comprising:
wherein the apparatus is one of an access point devices or a station.
